# EUROPEAN PATENT SPECIFICATION

(11) **EP 0 742 366 B1**
(45) Date of publication and mention of the grant of the patent: **30.09.1998**
(21) Application number: 96107613.0
(22) Date of filing: 13.05.1996
(51) Int. Cl.: F02M 69/04, F02M 69/10, F02B 25/14, F02B 23/10

(54) **Internal combustion engine**
Brennkraftmaschine
Moteur à combustion interne

(30) Priority: 12.05.1995 JP 138511/95; 15.05.1995 JP 139983/95; 29.05.1995 JP 153980/95
(43) Date of publication of application: 13.11.1996
(73) Proprietor: YAMAHA HATSUDOKI KABUSHIKI KAISHA, Iwata-shi Shizuoka-ken, 438 (JP)
(72) Inventor: Yoshida, Takeo, c/o Yamaha Hatsudoki K.K., Iwata-shi, Shizuoka-ken (JP); Suzuki, Takahiro, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- WO-A-87/00575
- DE-A- 1 934 882
- DE-A- 3 128 543
- DE-A- 4 100 086
- FR-A- 2 692 625
- GB-A- 723 972
- GB-A- 2 199 617
- GB-A- 2 215 398
- US-A- 5 107 810
- US-A- 5 249 557

## Description

The present invention relates to an internal combustion engine comprising at least one cylinder body a top end of which being covered by a cylinder head, said cylinder body accommodating a slidingly reciprocatable piston having at least one ring groove for accommodating at least one piston ring and at least one fuel injector located within a cylinder side wall at a first distance A to said top end of said cylinder body which is greater than a second distance RS, wherein RS is a second distance between said top end of said cylinder body and the lower end of said ring groove of said piston when it is at a top dead center position.

Such an internal combustion engine is known from US-A-5,107,810.

Moreover, similar internal combustion engines of a fuel injection type include one in which a combustion chamber is formed with a cylinder head, a cylinder body, and a piston, a scavenging port and an exhaust port are formed in the cylinder body, an injector is mounted on a cylinder body side wall, and fuel is injected from the injector to the combustion chamber.

Such a type of internal combustion engines include one in which an injector is mounted on a cylinder body side wall, with an injector nozzle located at a position above the exhaust port and at a distance of 0.3 L to 0.7 L from the cylinder top surface where the L is assumed as the distance from the cylinder top surface to the piston top circumference when the piston is at the bottom dead point.

This type of engine has an advantage that the injector is covered with the piston at an early period of the combustion stroke when the pressure and heat load are high and as a result the durability of the injector is not shortened.

During the scavenging stroke and compression stroke, fuel is injected from the injector. In the conventional engine, however, the injector is covered with the piston at an early time in the middle of the piston moving from the the bottom dead center to the top dead center. As a result, injection period is restricted, and in order to supply a large amount of fuel during high speed operation, additional injectors are required or a higher injection pressure is required.

In principle, the same arguments apply for internal combustion engines of the four-stroke cycle type provided with an injector device located in the cylinder side wall.

Accordingly, it is an objective of the present invention to provide an improved internal combustion engine as indicated above which always facilitates the injection of a sufficient amount of fuel, is simple in construction and in addition lowers the heat load on the injector.

According to the invention, this objective is solved in that for said top dead center position of the piston the following inequation does apply RS < A < 0.3L, wherein L is a third distance between said top end of said cylinder body and the top circumference of said piston when it is in a bottom dead center position.

According to an embodiment of the invention, this internal combustion engine is provided with an engine control device for controlling said injector on the basis of detected engine operating conditions which may be one or a combination of a crank angle, a crankcase inside pressure, a cylinder inside pressure, knocking of the engine, intake air temperature, a throttle opening, an intake pressure, a cylinder temperature, an atmospheric pressure, a coolant temperature and an engine speed.

When, according to another embodiment of the invention, said injector comprises an injection passage directed transversely to the cylinder axis and leading to at least one injection hole having an opening angle of at least 45° along the cylinder axis, the distribution of fuel within the cylinder and combustion chamber is enhanced.

According to a further embodiment of the invention, the injection passage of said injector branches off into at least two injection holes the upper of which is directed to the cylinder head side and the lower of which is directed to the piston side assuming said piston is at its bottom dead center position.

A further enhancement of the fuel distribution is possible when two lower injection holes or two upper injection holes and two lower injection holes are provided.

In order to receive a uniform air/fuel mixture prior to the ignition, it is advantageous when the amount of fuel injected by said one or the upper injection holes is smaller than the fuel amount injected by said one or the lower injection holes.

According to one preferred embodiment of the invention, a tip portion of said injector is located in a nozzle hole formed through said cylinder side wall, said injector has an integrally formed arch-shaped injection flow guide, said injection flow guide is provided with guide surfaces for branching the injection flow into an upward injection flow to said cylinder head and a downward injection flow to said piston, assuming said piston is at its bottom dead center position, whereby said side guide surfaces define an opening angle in cylinder axis direction of at least 45°.

When said internal combustion engine is one of a two-stroke cycle type comprising at least one exhaust port and at least one scavenging port opposing each other, it is advantageous when a fourth distance ES between said top end of said cylinder body and said exhaust port fulfils the following inequation:$\text{0.35 ES < A < 0.65 ES.}$

According to the invention, since the injector is mounted to a specified position along a zone in which injection is possible, a better fuel distribution is ensured in comparison with the conventional arrangement. In addition, the heat load on the injector by the piston at an early period of the combustion stroke is lowered.

Other preferred embodiments of the present invention are laid down in further dependent claims.

In the following, the present invention is explained in greater detail with respect to several embodiments thereof in conjunction with the accompanying drawings, wherein:
- FIG. 1: shows schematically an embodiment of a fuel injection internal combustion engine in an outboard motor, mainly showing one cylinder;
- FIG. 2: is a flow chart for fuel and air for the cylinder side wall injection;
- FIG. 3: shows a vertical cross section of an upper part of one cylinder of a fuel injection internal combustion engine;
- FIG. 4: shows a horizontal cross section of a fuel injection internal combustion engine;
- FIG. 5: shows a cross section of an exhaust system;
- FIG. 6: is a plan view of a fuel injection internal combustion engine;
- FIG. 7: shows schematically an embodiment of a fuel injection internal combustion engine in a motorcycle;
- FIG. 8: shows a vertical cross section of a fuel injection internal combustion engine in a motorcycle;
- FIG. 9: is a back view of a fuel injection internal combustion engine in a motorcycle;
- FIG. 10: is a flow chart for fuel and air for the cylinder side wall injection;
- FIG. 11: shows another embodiment of a fuel injection internal combustion engine in an outboard motor in horizontal cross section at the same position as that in FIG. 4;
- FIG. 12: shows another embodiment of a fuel injection internal combustion engine in a motorcycle in back view at the same position as that in FIG. 9;
- FIG. 13: shows a cross section of an injector;
- FIG. 14: shows a cross section of the tip portion of an injector;
- FIG. 15: is a fuel injection timing chart;
- FIG. 16: shows a schematic cross section of fuel injection from the injector;
- FIG. 17: shows a schematic plan view of fuel injection from the injector;
- FIG. 18: shows position and size of the injection holes of the injector;
- FIG. 19: shows a schematic cross section of fuel injection from the injector of another embodiment;
- FIG. 20: shows another embodiment of the injection hole of the injector;
- FIG. 21: shows a schematic cross section of fuel injection from the injector of another embodiment;
- FIG. 22: shows another embodiment of the injection hole of the injector;
- FIG. 23: shows a schematic cross section of fuel injection from the injector of another embodiment;
- FIG. 24: shows another embodiment of the injection hole of the injector;
- FIG. 25: shows position and size of the injection holes of the injector according to another embodiment;
- FIG. 26: shows position and size of the injection holes of the injector according to a further embodiment;
- FIG. 27: shows the injection holes of the injector of another embodiment;
- FIG. 28: shows the injection holes of the injector of another embodiment;
- FIG. 29: shows the injector of another embodiment;
- FIG. 30: shows the injection holes of the injector of another embodiment;
- FIG. 31: shows the injection holes of the injector of another embodiment;
- FIG. 32: shows the injection holes of the injector of another embodiment;
- FIG. 33: shows the injection holes of the injector of another embodiment;
- FIG. 34: shows a cross section of the injector taken in a plane intersecting the cross section of FIG. 21 at right angles;
- FIG. 35: shows a cross section of the injector of another embodiment;
- FIG. 36: shows an embodiment in a four-cycle engine with a cross section for a cylinder; and
- FIG. 37: shows an embodiment in a four-cycle engine with a plan view of the engine.

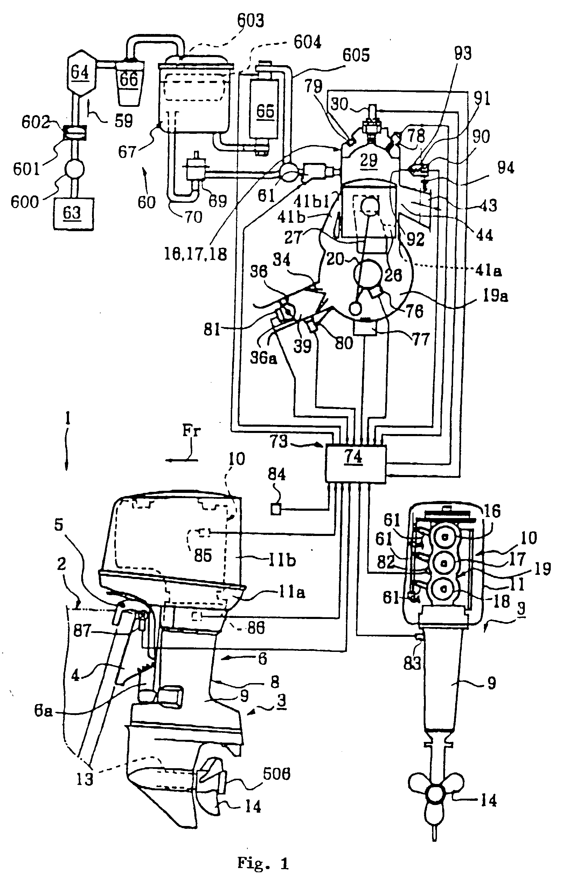

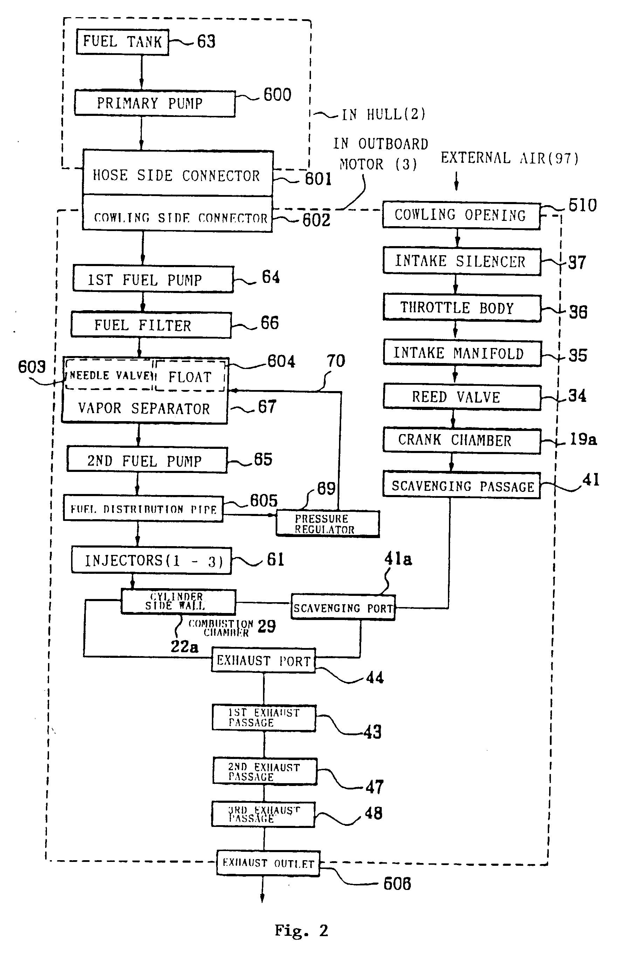

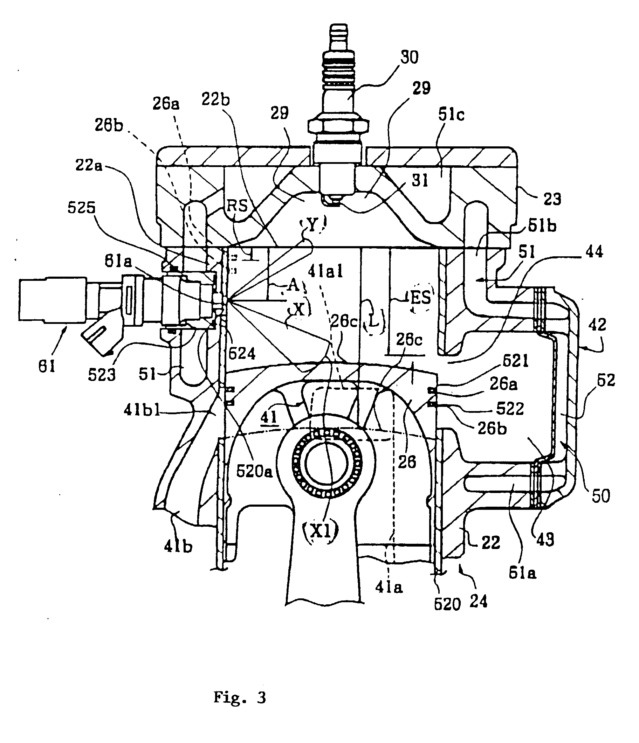

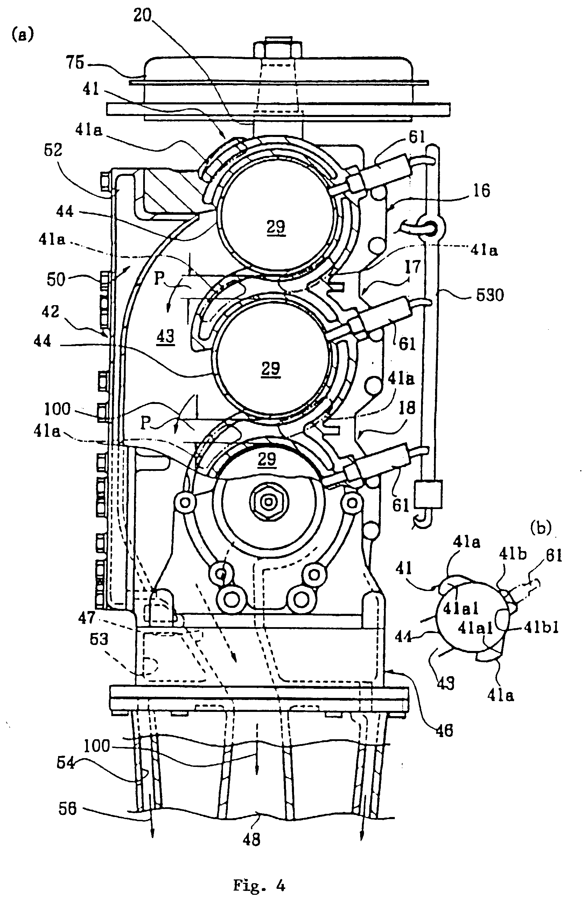

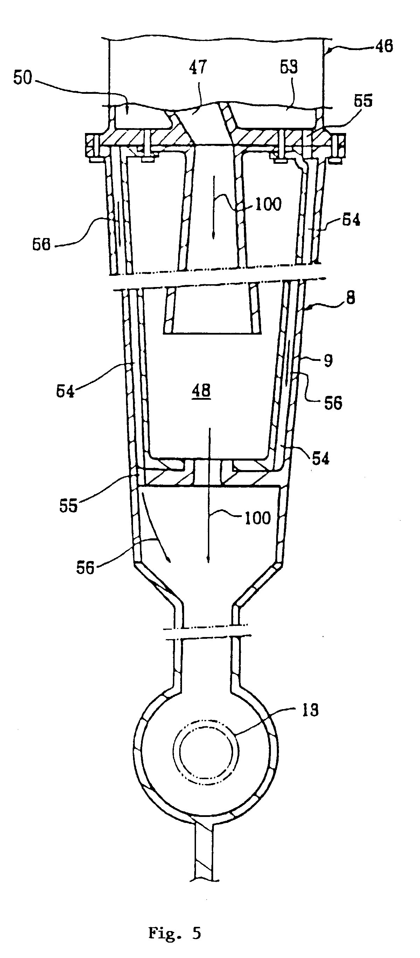

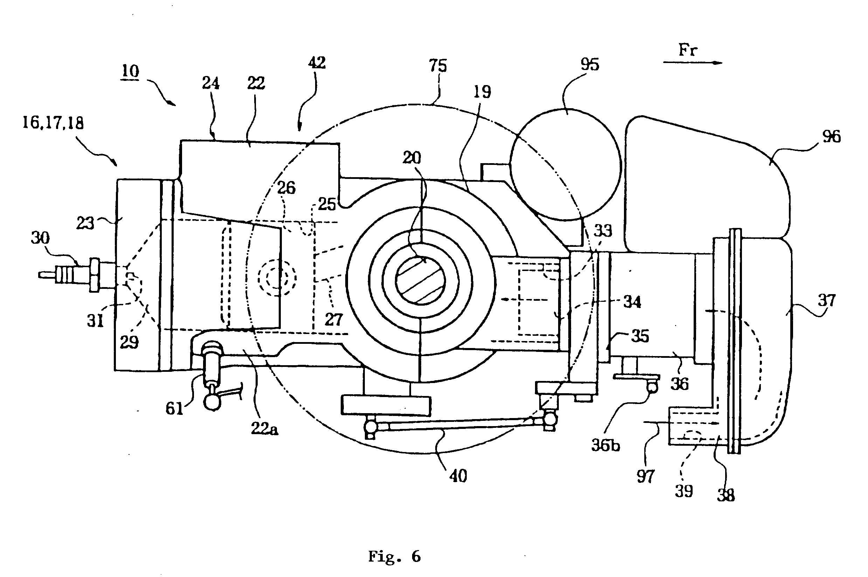

The internal combustion engine of a fuel injection type of this invention will be hereinafter described in reference to the appended drawings. FIG. 1 is a schematic drawing, mainly for one cylinder, of an internal combustion engine of a fuel injection type as an embodiment mounted on an outboard motor. FIG. 2 is a flow chart for fuel and air injected from a cylinder side wall. FIG. 3 shows a cross section of an upper part of a cylinder of the fuel injection type internal combustion engine. FIG. 4 shows a horizontal cross section of the fuel injection type internal combustion engine. FIG. 5 is a cross-sectional view showing an exhaust system. FIG. 6 is a plan view of the fuel injection type internal combustion engine.

FIG. 1 shows a vessel 1 as a vehicle with the arrow Fr showing the direction of advancing. The words right and left used later herein mean the directions as seen in the advancing direction described above. The vessel 1 has a hull 2 with its stern mounted with a detachable outboard motor 3. The outboard motor 3 comprises a bracket 4 mounted on the stern, and an outboard motor proper 6 pivoted with a pivot shaft 5 (arranged in the direction normal to the Fr direction) relative to the bracket 4. The outboard motor proper 6 is provided with a power transmission device 8 which in turn comprises a transmission case 9 constituting the outer shell of the power transmission device 8 and a transmission mechanism housed in the transmission case 9. The transmission case 9 is pivoted for swinging about a vertical pivot shaft (not shown) provided generally vertically on a swivel bracket 6a which constituted the outboard motor proper 6 pivoted with the pivot shaft 5 relative to the bracket 4. The outboard motor proper 6 is also provided with a two cycle engine 10 of a fuel injection type. The engine 10 is detachably mounted on the top end of the transmission case 9 with its under side covered with a cover lla and its upper side covered with a cover 11b which can be opened and closed as required. The transmission case 9 extends downward into the water. At the lower end of the transmission case 9 is supported a shaft (not shown) extending horizontally and a propeller 14 is mounted on the shaft. The propeller 14 is connected through the transmission mechanism of the power transmission device 8 for interlocked movement with the engine 10. An exhaust passage 13 sends exhaust gas to the propeller 14.

The engine 10 comprises three cylinders: the first cylinder 16, the second cylinder 17 and the third cylinder 18, stacked one over another. The cylinders 16, 17, 18 of the engine 10 has a common crankcase 19 and a cylinder body 22. A crankshaft 20 with its axis generally vertically directed is housed in the area where the crankcase 19 and the cylinder body 22 are joined together, and supported for free rotation about its axis relative to the crankcase 19 and the cylinder body 22. Cylinder bodies 22 of the cylinders 16, 17, 18 are attached to the rear of the crankcase 9 to form a single unit. Projecting ends of the cylinder bodies 22 are respectively provided with detachable cylinder heads 23. The cylinder bodies 22 are joined together to constitute a cylinder block 24, and the cylinder heads 23 are also joined together.

Each of the cylinder bodies 22 has a cylinder bore 25 into which a piston 26 is inserted for free sliding back and forth. Each piston 26 is connected through a connecting rod 27 to the crankshaft 20. The space surrounded with the cylinder head 23 and the piston 26 in the cylinder bore 25 corresponds to the "cylinder inside" which becomes a combustion chamber 29 when the piston 26 approaches the cylinder head 23 to a certain extent. Each of the cylinder heads 23 is provided with an ignition plug 30, corresponding to each combustion chamber 29, with its discharging portion 31 facing the combustion chamber 29. For each cylinder, a crank chamber 19a is formed with the cylinder block 24 and the crankcase 19.

On the front side of the crankcase 19 are formed three intake ports 33 each connected to each crank chamber 19a and each provided with a reed valve 34. In front of the reed valve 34 are connected an intake manifold 35, a throttle body 36 housing a throttle valve 36a, and an intake silencer 37 in succession in that order. The top end of the intake silencer 37 is provided with an inlet duct 38 opening to the rear so as to take in air from a cowling opening 510. The inlet duct 38, intake silencer 37, throttle body 36, intake manifold 35, and reed valve 34 are connected to each other through intake passages 39 formed respectively in those components. The intake passages 39 are connected to the intake port 33. Throttle levers 36b provided respectively on the throttle bodies 36 are connected together with interlocking means 40 so that the throttle valves 36a are interlocked to perform opening and closing movements together with the throttle levers 36b when an operating mechanism is operated by an operator.

Each cylinder body 22 around the cylinder bore 25 is provided with a scavenging passage 41. The scavenging passage 41 is constituted with two main scavenging passages 41a each having a scavenging port 41a1 opening to the cylinder bore 25 and a sub-scavenging passage 41b having a scavenging port 41b1. The scavenging ports 41a1 are located at opposing positions, and an exhaust port 41b1 of the exhaust passage 41b is located to oppose an exhaust port 44. These exhaust passages 41 make internal connections between the crankcase 19 and the combustion chamber 29.

To the left side of the cylinder block 24 is attached an exhaust manifold 42. One end of a first exhaust passage 43 in the exhaust manifold 42 is branched into three parts each opening through each exhaust port 44 to each combustion chamber 29. An exhaust guide 46 is interposed between the cylinder block 24 and the transmission case 9. A second exhaust passage 47 of the exhaust guide 46 is connected to the other end of the first exhaust passage 43. A third exhaust passage 48 is formed in the transmission case 9. One end of the third exhaust passage 48 is connected to the second exhaust passage 47 and the other end of the third exhaust passage 48 is a cylindrical exhaust passage 13 connected to an exhaust passage in the propeller 14. The end of the exhaust passage is open as a discharge port 506 into the water.

The engine 10 is provided with a cooling device 50 of a water-cooled type. The cooling device 50 comprises a first water cooling jacket 51 formed for the cylinder head 23 and the cylinder block 24, a second cooling water jacket 52 formed for the exhaust manifold 42, a third cooling water jacket 53 formed for the exhaust guide 46 so as to surround the second exhaust passage 47, and a fourth cooling water jacket 54 formed for the transmission case 9 so as to surround the third exhaust passage 48, and those cooling water jackets 51 - 54 are connected to each other either directly or through a plurality of cooling water connection passages 55. The lower end of the fourth cooling water jacket 54 is connected to the downstream side of the third exhaust passage 48.

A water pump is provided for supplying cooling water 56 such as sea water to the first cooling water jacket 51. The cooling water 56 passes through; the outer portion 51a, surrounding the exhaust manifold, of the first cooling water jacket 51; the second cooling water jacket 52; the outer portion 51b, surrounding the upper part of the cylinder, in the first cooling water jacket 51; the cylinder head portion 51c in the first cooling water jacket 51, the cooling water jackets 53, 54, and the downstream end of the third exhaust passage 48, and discharged into the water. As the cooling water flows, the first through third cylinders 16, 17, 18 are cooled.

The engine 10 is provided with a fuel supply device 60 for supplying fuel 59. The fuel supply device 60 has three injectors 61 detachably attached to the cylinder side walls 22a of the cylinder bodies 22 corresponding to the first through third cylinders 16, 17, 18. The injectors 61 inject fuel 59 appropriately from the cylinder wall sides 22a into the combustion chambers 29. Each injector 61 is provided with a first fuel pump 64 and a second fuel pump 65 in series. The first fuel pump 64 is operated by pressure pulsation in the crankcase 19a to draw fuel 59 in a fuel tank 63 in the hull 2, and sends the fuel 59 to a vapor separator 67 which is a fuel storage (small tank) in the outboard motor 3. The second fuel pump 65 pressurizes and supplies fuel 59 at the vapor separator 67.

A primary pump 600 is interposed between the fuel tank 63 and the first fuel pump 64. The primary pump 600 and the first fuel pump 64 are interconnected through a hose side connector 601 and a cowling side connector 602. The primary pump 600 is for manually supplying fuel before starting.

A fuel filter 66 and the vapor separator 67 are interposed in series between the first fuel pump 64 and the second fuel pump 65. In the vapor separator 67 are provided a noodle valve 603 and a float 604. When the level of fuel 59 in the vapor separator 67 lowers and the float 604 lowers to a certain level or below, the needle valve 603 opens to supply fuel 59 from the fuel tank 63 side. The second fuel pump 65 supplies fuel 59 through a fuel supply pipe 605 to each injector 61. The fuel supply pipe 605 is provided with a pressure regulator 69 for use in the adjustment of the pressure of fuel 59 supplied to the injector 61. Fuel not injected is returned through a fuel passage 70 to the vapor separator 67 located on the upstream side of the second fuel pump 65. Tiny bubbles of fuel vapor or air mixed in the fuel are separated with the vapor separator 67.

Each injector 61 is of an electromagnetic type, and when it is energized (or de-energized), fuel 59 is injected into the combustion chamber 29 for that period. Of the components of the fuel supply device 60, those from the fuel tank 63 to the hose side connector 601 are located in the hull 2, and others constitute the outboard motor 3.

FIG. 1 shows an engine control device 73 for controlling the engine 10. The engine control device 73 is provided with an electronic control unit 74 and connected electrically to ignition plugs 30 functioning as actuators, the injectors 61, and the second fuel pump 65. A flywheel magneto 75 is attached to the top end of the crankshaft 20 for supplying electric power to the control unit 74 directly or through a battery.

Various sensors for detecting the operating state of the engine 10 are provided and electrically connected to the control unit 74. Such sensors are: a crank angle sensor 76 for detecting a reference crank angle and rotation angle of the crankshaft 20, crankcase inside pressure sensor 77 for detecting the pressure inside the crankcase 19, a cylinder inside pressure sensor 78 for detecting the pressure inside one of the cylinders 16 - 18, a knocking sensor 79 for detecting the state in the cylinders 16 - 18, an intake air temperature sensor 80 for detecting the temperature in the intake passage 39, and a throttle opening sensor 81 for detecting the degree of opening of a throttle body 36. An intake pressure sensor may be also provided for detecting the pressure of the intake passage 39.

There are also provided: a cylinder temperature sensor 82 for detecting the temperature of one cylinder body 22, a back pressure sensor for detecting the pressure on the upstream side in the third exhaust passage 48, an atmospheric pressure sensor 84 for detecting the atmospheric pressure, a cooling water temperature sensor 85 for detecting the temperature of cooling water 56; a shift sensor 86 for detecting forward, neutral, and reverse shifting operations and shifted states of the power transmission device 8; and a trim angle sensor 87 for detecting up and down rotated positions of the outboard motor 3 about the pivot shaft 5.

Each of the cylinders 16 - 18 is also provided with an O₂ sensor 90 disposed in a sensor holding chamber 91. When the piston 26 moves down and passes a relief valve hole 92 in the cylinder side wall 22a, a relief valve 93 is opened by exhaust gas pressure, and exhaust gas enters the sensor holding chamber 91. The O₂ sensor 90 detects the concentration of O₂ in exhaust gas, and according to the detected value, calculates air to fuel ratio in the combustion chamber 29. The exhaust gas in the sensor holding chamber 91 passes through a check valve 94 and is exhausted to the first exhaust passage 43. The engine 10 is also provided with a starter 95 and an oil tank 96.

During operation of the engine 10, when the pistons 26 in the first through third cylinders 16 - 18 move in succession from the bottom dead center on the crankshaft 20 side toward the combustion chamber 29, the pistons 26 cover in succession the scavenging ports 41a1 and 41b1 of the scavenging passage 41 and the exhaust port 44 of the first exhaust passage 43. When the piston 26 moves toward the combustion chamber 29 as described above, the pressure in the crank chamber 19a in the crankcase 19 becomes negative. Then, the pressures on the reed valve 34, the intake passage 39 in the intake port 33, intake manifold 35, throttle body 36, and the intake silencer 37 become negative in succession. As a result, external air 97 is drawn from the intake port 33 into the intake passage 39 and into the crank chamber 19a in the crankcase 19. This process is the "intake stroke".

When the piston 26 further moves toward the combustion chamber 29 after the scavenging ports 41a1 and 41b1 of the scavenging passage 41 and the exhaust port 44 of the first exhaust passage 43 are covered, the mixture already taken in the combustion chamber 29 is compressed. This process is the "compression stroke".

Immediately before the piston 26 reaches the top dead center, the mixture is ignited with an electric discharge of the discharging portion 31 of the ignition plug 30 controlled with the engine control device 73, burns and expands to push back the piston 26 toward the crankshaft 20 when the piston goes beyond the top dead center. This process is the "combustion stroke".

As the piston 26 moves toward the crankshaft 20, the air taken into the crank chamber 19a of the crankcase 19 is pre-compressed. By the way, the reed valve 34 is closed by the pressure prevailing at this time. In the middle of the movement of the piston 26 toward the crankshaft 20, first the exhaust port 44 is uncovered. Then, burned product of the mixture or exhaust gas 100 is discharged through the exhaust port 44. This process is the "exhaust stroke".

The exhaust gas 100 is exhausted through the first exhaust passage 43, second exhaust passage 47, third exhaust passage 48, and exhaust passage 13 into the water. In this case, the cooling water 56 after cooling the cylinders 16 - 18 runs through the fourth cooling water jacket 54 and the cooling water connecting passage 55 and is exhausted together with the exhaust gas 100 into the water described above.

As the piston 26 moves toward the crankshaft 20 and the exhaust port 44 is uncovered, next, the scavenging port 41 is opened. Then, the air taken in and pre-compresssed as described above is made to flow through the scavenging passage 41 into the combustion chamber 29. This intake air pushes out part of the burned gas remaining in the combustion chamber 29 to the first exhaust passage 43. This process is the "scavenging stroke". Since the scavenging stroke begins in the middle of the exhaust stroke, and the exhaust stroke is over in the middle of the scavenging stroke, the two strokes are also called collectively as the scavenging exhaust stroke. After that, the piston 26 returns to the bottom dead center. Fuel is injected from the injector 61 during the period from the middle of the scavenging stroke to the early period of the compression stroke.

In this case, part of the air which has flowed through the scavenging passage 41 into the combustion chamber 29 blows out to the first exhaust passage 43 side, mixes with burned gas and exhausted as the exhaust gas 100. On the other hand, the rest of the burned gas which has not been exhausted mixes with fresh intake. From that state, the piston 26 moves again toward the combustion chamber 29 side, and the steps described above are repeated so that the crankshaft 20 is rotated. By the way, the injection is carried out after the blow out is stopped. Through the crankshaft 20, the engine outputs a power to rotate the propeller 14 through the power transmission device 8 and drive forward the vessel 1 as an object to be driven. The first, second, and third cylinders 16, 17, and 18 work in that order with a phase difference of a crank angle of 120°.

In FIG. 3, the piston 26 is arranged for sliding in a sleeve 520 and formed with a first ring groove 26a and a second ring groove 26b over and under respectively, and with a first piston ring 521 and a second piston ring 522 respectively fit therein. The cylinder side wall 22a is provided the injector 61 through a cap 523. The front and rear sides of the cap 523 are sealed with seal members 524 and 525, respectively. The tip portion 61a of the injector 61 is mounted to face an opening 520a of the sleeve 520 and the mounting position is determined as described below.

When it is assumed that, the distance between the top end 22b of the cylinder and the mounting position of the injector is A, the distance between the top end 22b of the cylinder and the piston top circumference when the piston is at the bottom dead center is L, and the distance between the top end 22b of the cylinder and the lower end of the first ring groove 26a in which the first piston ring 521 is fit is RS, a relationship holds as RS < A < 0.3 L.

Also, when it is assumed that the distance between the top end 22b of the cylinder and the exhaust port 44 is ES, a relationship holds as 0.3 ES < A < 0.65 ES.

By mounting the injector 61 to a specified position as described above, a longer zone in which injection is possible may be secured in comparison with the conventional arrangement while lowering heat load on the injector by the piston 26 at an early period of the combustion stroke.

Two, upper and lower fuel injections are made from the injector 61, with the downward directed injection flow X directed to the piston head 26c which is moving up from the bottom dead center to the top dead center, and with the upward directed injection flow Y directed to the ignition plug 30. While the downward directed injection flow X cools the piston head 26c, evaporation of the fuel itself is accelerated.

However, if there is only the downward directed injection flow X, mixture near the ascending piston head 26c becomes rich while mixture near the ascending piston head 26c becomes rich while mixture in the upper portion of the combustion chamber 29 becomes lean. The upward directed injection flow Y functions to make mixture in the entire combustion chamber 29 as uniform as possible and to make combustion smooth.

At the time of starting or when the load is low, the piston temperature is low, the throttle valve opening is small and the gas flow in the cylinder is less active. Therefore, mixture cannot be made uniform across the entire combustion chamber 29 with only one of the injection flows X and Y. However, since mixture is made uniform by the two injection flows X and Y, smoother combustion is possible.

Furthermore, since combustible mixture is securely formed by the upward directed injection flow around the ignition plug 30 at the time of starting, ease of starting is improved.

By the way, the flow velocities of the injection flows X and Y are made 10 - 30 m/s.

The injector 61 is located nearer to the cylinder head 23 than to the sub-scavenging port 41bl. The downward directed injection flow X is directed to the exhaust port 44 or the piston head 26c and securely strikes the piston head 26c after the exhaust port 44 is covered with the piston 26, and heat exchange occurs at the piston head 26c.

Injection start timing is set so that the exhaust port 44 is covered before the tip of the downward directed injection flow X reaches the exhaust port 44. The tip of the downward directed injection flow X is shown as X1. In the case all the downward directed injection flow X is made to strike the piston head 26c, the injection start timing is set so that the exhaust port 44 is covered before the tip of rebounded injection flow reaches the exhaust port 44.

As described above, the injector 61 is located according to this invention nearer to the cylinder head 23 than according to the conventional arrangement. As a result, the injection flow travels a longer distance. During the travel, fuel exchanges heat with heated atmosphere in the combustion chamber also before reaching the piston head 26c.

In FIG. 4, a fuel distribution pipe 530 for the injectors 61 is arranged parallel to a plane connecting the axes of the plural number of cylinders, with the injectors 61 arranged at identical positions in the three cylinders 16 - 18.

Alternatively, the lower is the cylinder position, the lower (nearer to the crank) may be arranged the position of the injector. The lower is the injector position, the greater is the heat load, so that the injector 61 is covered for a longer period of time during the combustion stroke. On the other hand, at least for the topmost cylinder 16, the injector 61 is arranged with dimensional relationships of RS < A < 0.3 L and 0.35 ES < A < 0.65 ES.

The sub-scavenging port 41b1 and the exhaust port 44 are staggered in the cylinder axis direction, and the attitude of the injector 61 is tilted. Therefore, the cylinder pitch P may be shortened while avoiding interference between adjacent main scavenging ports 41a1.

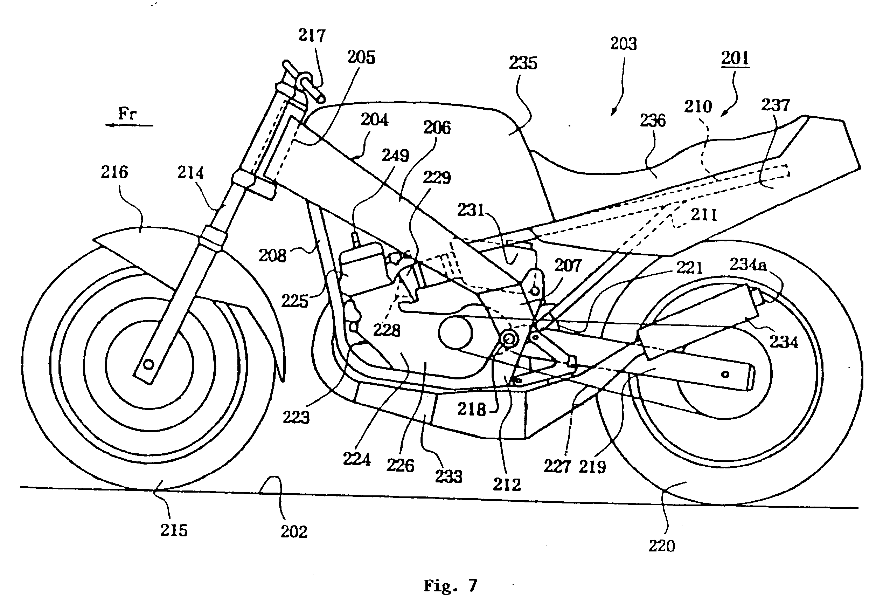

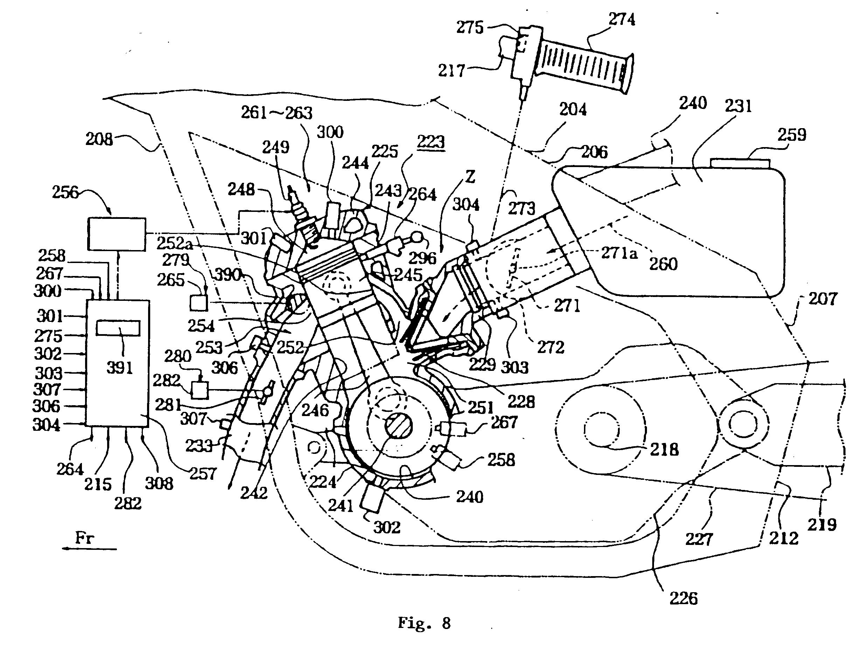

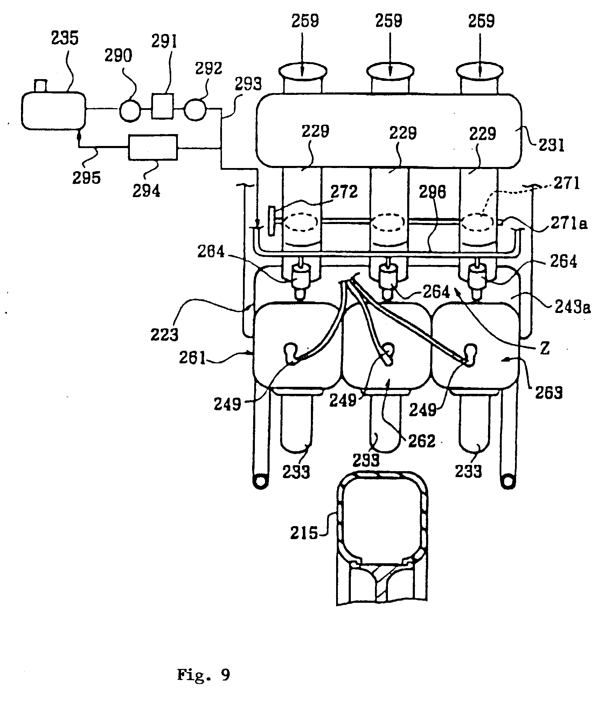

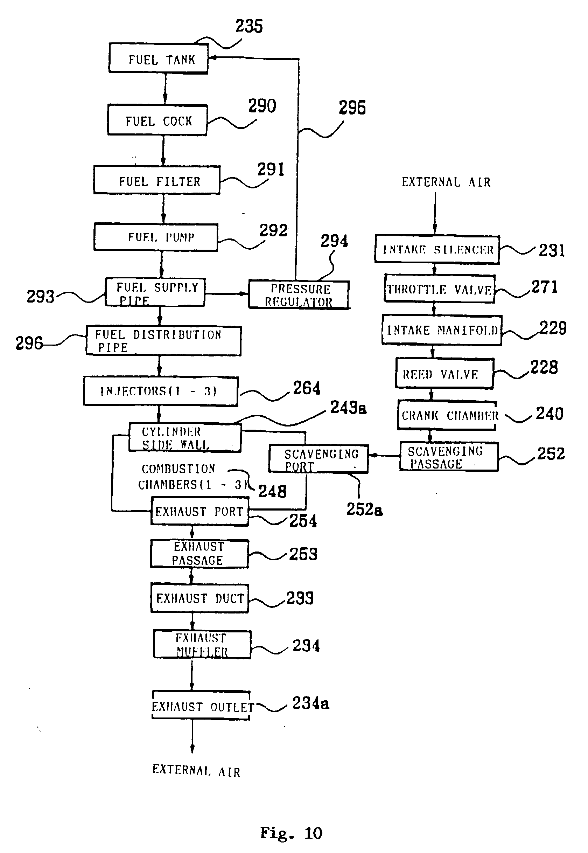

FIGs. 7 through 10 show an embodiment of mounting a fuel injection internal combustion engine on a motorcycle. FIG. 7 shows a schematic configuration of the embodiment of mounting the fuel injection internal combustion engine on a motorcycle. FIG. 8 shows a vertical cross section of the fuel injection internal combustion engine. FIG. 9 is a back view of the fuel injection internal combustion engine. FIG. 10 is a flow chart of fuel and air of cylinder side wall injection.

Those figures show a motorcycle 201 as an example of a riding type vehicle, with the arrow Fr showing the advancing direction. The words right and left used later herein mean the directions as seen in the advancing direction described above. The symbol 202 is the ground on which the motorcycle 201 runs. The motorcycle 201 has a chassis 203 having a chassis frame 204. The chassis frame 204 has at its front end a head pipe 205. From the head pipe 205 extend paired right and left main frames 206 obliquely down backward. From each of the main frames 206 extend seat pillar tubes 207. From the front underside of the main frames 206 extend down tubes 208 with their extension ends connected to the extension ends of the seat pillar tubes 207.

From the rear part of the main frames 206 extend rearwardly and upwardly seat rails 210 supported with paired right and left back stays 211 on the seat pillar tubes 207. The area where the back stays 211 join the seat pillar tubes 207 constitutes a rear arm bracket 212. Freely steerable front forks 214 are supported on the head pipe 205. At the lower ends of the front forks 214 is supported a front wheel 215 with a front fender 216 covering the front wheel 215 from above. The front fender 216 is secured to a vertically middle positions on the front forks 214. At the top ends of the front forks 214 are attached handlebars 217.

Rear arms 219 are supported for vertical swinging with a pivot shaft 218 on the rear arm brackets 212. A rear wheel 220 is supported at the swinging ends of the rear arms 219, with dampers 221 interposed between the seat rails 210 and the rear arms 219. A fuel injection internal combustion engine 223 is disposed in a space surrounded with the main frames 206, seat pillar tubes 207, and the down tubes 208, namely within the chassis frame 204. The engine 223 is of a two cycle type comprising a crankcase 224, and cylinders 225 projecting up forward from the crankcase 224, and detachably mounted on the chassis frame 204 by means of tightening means. On the back side of the crankcase 224 is connected a power transmission device 226 on the output side of which is connected the rear wheel 220 through a chain transmission mechanism 227.

To the back side of the cylinders 225 are connected reed valves 228, an intake manifold 229, and an intake silencer 231 in that order. The intake manifold 229 is provided with a throttle valve 271 for controlling the intake amount. A throttle pulley 272 attached to a shaft 271a of the throttle valve 271 is connected through a throttle wire 273 to a throttle grip 274 so that the throttle valve 271 is opened and closed by the operation of the throttle grip 274. The throttle grip 274 is provided on one of the handlebars 217 and has a throttle opening sensor 275.

To the front side of the cylinders 225 is connected one end of an exhaust tube 233 with its other end extending backward near the underside of the down tubes 208 and connected at its rear end to an exhaust muffler 234. Exhaust gas is exhausted from the outlet 284a of the exhaust muffler 234.

A fuel tank 235 is supported of the main frame 206. A seat 236 is supported on the seat rails 210. Side covers 237 are provided for covering the rear part of the chassis 203. By the operation of the engine 223, the motorcycle 201 is driven forward on the road 202 as the power of the engine 223 is transmitted to the rear wheel 220 through the power transmission device 226, the chain transmission mechanism 227, etc.

The engine 223 has the first through third cylinders 261-263. A crankshaft 241 is housed in a crank chamber 240 in the crankcase 224 and supported for free rotation about its axis. The cylinder 225 of the engine 223 comprises a cylinder body 243 having a cylinder bore 242 with its axis generally vertical, and a cylinder head attached to the projecting end of the cylinder body 243. In the cylinder bore 242 is inserted a piston 245 for free axial sliding and connected through a connecting rod 246 to the crankshaft 241.

The space surrounded with the cylinder head 224 and the piston 245 in the cylinder bore 242 becomes the combustion chamber 248 when the piston 245 approaches the cylinder head 224 to a certain extent. The cylinder head 244 is provided with a spark plug 249 with its discharging portion facing the combustion chamber 248. In the back upper area of the crankcase 224 is formed an intake port 251 connected to a reed valve 228. The cylinder body 243 around the cylinder bore 242 is provided with a scavenging passage 252 making connection between the crank chamber 240 and the combustion chamber 248. Part of the scavenging passage 252 which is open to the combustion chamber 248 is a scavenging port 252a. An exhaust port 254 is formed in the front part of the cylinder body 243 so as to make connection between the combustion chamber 248 and an exhaust passage 253 in the upstream end which is the front end of the exhaust tube 233.

The engine 223 is provided with plural three injectors 264 corresponding to the first through third cylinders 261 - 263. The injectors 264 are detachably attached to the cylinder side walls 243a of the cylinder bodies 243 to inject fuel supplied from the fuel tank 235 from the cylinder side walls 243a into the combustion chambers 248. Since the structure, mounting position, injection direction, and injection timing of the injectors 264 are the same with those of the previous embodiment, descriptions on them are omitted.

A fuel cock 290 is provided under the fuel tank 235. To the fuel cock 290 are connected a fuel filter 291, a fuel supply pump 292, and a fuel supply pipe 293 in that order. Fuel is supplied from the fuel supply pipe 293 through a fuel distribution pipe 296 to the injectors 264. The fuel distribution pipe 293 is provided with pressure regulator 294 for regulating the pressure of fuel supplied to the injectors 264. Surplus fuel is returned through the pressure regulator 294 and a return fuel passage 295. A space Z behind the cylinder bodies 243, above the intake manifold 229, and below the fuel tank 235 is utilized to lay out the fuel distribution pipe 296 and the injector 264 compactly while avoiding interference with other components and protecting the fuel distribution pipe 296.

An ignition plug 249 is electrically connected to an electronic ignition circuit 256 connected to an electronic engine control device 257. A crank angle sensor 258 is also provided for detecting the rotation angle of the crankshaft 241 and also connected to the electronic engine control device 257.

During operation of the engine 223, when the piston 245 moves from the bottom dead center on the crankshaft 241 side (shown with phantom lines in FIG. 8) toward the combustion chamber 248, the piston 248 covers in succession the scavenging port 252a and the exhaust port 254 in that order. When the piston 245 moves toward the combustion chamber 248 as described above, the pressure in the crank chamber 240 becomes negative. Then, the external air 260 is drawn through the intake silencer 231 as an intake air 260.

Next, the intake air 260 flows through the intake manifold 229 and the reed valve 228 and taken into the crank chamber 240. This process is the "intake stroke".

When the piston 245 moves further toward the combustion chamber 248 after the scavenging port 252a and the exhaust port 254 are covered, mixture formed with fuel already injected with the injector 264 into the combustion chamber 248 and/or fuel injected during this process is compressed. This process is the "compression stroke".

At a required crank angle, namely a required ignition timing, detected with the crank angle sensor 258 immediately before the piston 245 reaches the top dead center, the discharging portion of the ignition plug 249 discharges according to the output signal from the ignition circuit 256 controlled with the engine control device 257. Then, the mixture is ignited and burned, and the burned gas expands. As a result, the piston 245 after passing the top dead center is pushed back toward the crank chamber 240. This process is the "combustion stroke".

As the piston 245 moves toward the crank chamber 240, the air taken into the crank chamber 240 is pre-compressed. At this time, the reed valve 228 is closed by the pressure in the crank chamber 240.

In the middle of the movement of the piston 245 toward the crank chamber 240, first the exhaust port 254 is uncovered. Then, burned product of the mixture or exhaust gas is exhausted from the combustion chamber 248 through the exhaust port 254. This process is the "exhaust stroke". The exhaust gas is exhausted outside through the exhaust passage 253 in the exhaust tube 233.

As the piston 245 moves toward the crank chamber 240, the exhaust port 254 is opened and then the scavenging port 252a is opened. Then the air pre-compressed in the crank chamber 240 flows through the scavenging passage 252 into the combustion chamber 248 and pushes out part of burned gas remaining in the combustion chamber 248 to the scavenging port 254 and at the same time the combustion chamber 248 is filled with air. This process is the "scavenging stroke". The "scavenging stroke" continues as the piston 245 returns to the bottom dead center, moves up again, and immediately before it covers the exhaust port 252a. Fuel is injected from the injector 204 during the period from the middle of the "scavenging stroke" to the beginning of the "compression stroke" when the piston 245 covers the injector 264.

From the state described above, the piston 245 moves again toward the combustion chamber 248 and the processes are repeated to rotate the crankshaft 241. Through the crankshaft 241 the engine 223 outputs power which is transmitted through the power transmission device 226 and the chain transmission mechanism 227 to the rear wheel 220.

An exhaust timing adjustment device 279 is provided for improving the engine performance by adjusting the exhaust timing when exhaust gas is exhausted from the combustion chamber 248 to the exhaust port 254. The exhaust timing adjustment device 279 has an exhaust timing adjustment valve 390 which opens and closes the upper opening of the exhaust port 254 so that the edge of the upper opening of the exhaust port 254 is variable. The exhaust timing adjustment valve 390 is actuated with an actuator 265 such as a servomotor, etc. which is connected to the engine control device 257.

An engine speed sensor 267 for detecting the revolution of the engine 223 or the crankshaft 241 is connected to the engine control device 257.

When the engine 223 speed is determined by the detection signal of the engine speed sensor 267 to be in the high speed range, the exhaust timing adjustment valve 390 is opened by the operation of the actuator 265 controlled with the engine control device 257, and the upper opening edge of the exhaust port 254 is positioned upward. Thus the exhaust timing is advanced to improve the engine performance in the high speed range.

When the engine 223 speed is determined to be in the middle or low speed range on the other hand, the actuator 265 closes the exhaust timing adjustment valve 390 so that the upper opening edge of the exhaust port 254 is positioned downward. Thus the exhaust timing is delayed to improve the engine performance in the middle or low speed range. While the exhaust timing is delayed at low engine speed, the injection timing may be advanced accordingly and more secure pre-mixture combustion is possible. That is to say, when the injection start timing is delayed at low speeds, injected fuel flow striking the piston head is not spread widely. Therefore, advancing the injection start timing makes it possible to cause injected fuel to strike a wide area of piston head and improve heat exchange with the piston 245.

The engine 223 is provided with an exhaust valve opening adjustment device 280 with an exhaust valve 281 for adjusting the opening of the exhaust passage 253 and restricting the flow rate of the exhaust gas flowing through the exhaust passage 253 at low loads or low speeds. The exhaust valve 281 is actuated with an actuator 282 such as a servomotor connected to a control device 391.

The engine 223 is provided with a combustion chamber pressure sensor 300 and a knock sensor 301. The combustion chamber pressure sensor 300 delays the ignition timing when the combustion chamber pressure exceeds a predetermined value. When knocking occurs, the knocking sensor 301 detects vibration and causes to delay the ignition timing and prevents knocking, and when the knocking disappears the ignition timing is returned to the original timing.

The engine 223 is also provided with a crank chamber pressure sensor 302, an intake pipe pressure sensor 303, intake pipe temperature sensor 304, an exhaust pipe pressure sensor 306, and an exhaust pipe temperature sensor 307. According to information from those sensors, the engine control device 257 controls the ignition timing, injection timing, injection period, and an oil supply device 308.

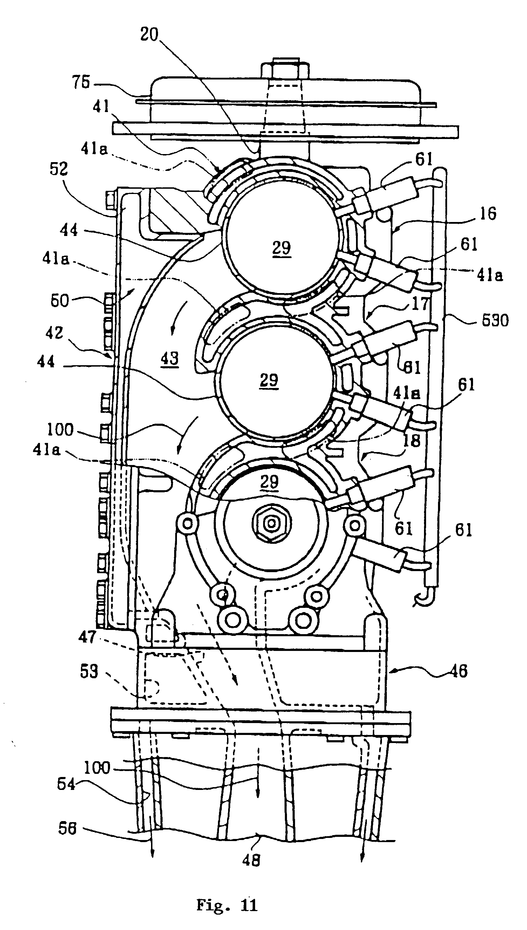

FIG. 11 shows another embodiment of the fuel injection internal combustion engine in an outboard motor in cross section at the same position as that in FIG. 4. In this embodiment, paired injectors 61 opposing each other are attached detachably to the cylinder side wall 22a of each of the first, second and third cylinders 16 - 18. While paired injectors 61 are attached to each cylinder 16, 17 or 18, the number of injectors 61 on each cylinder is not limited to two but may be more than two, or at least one at specified position.

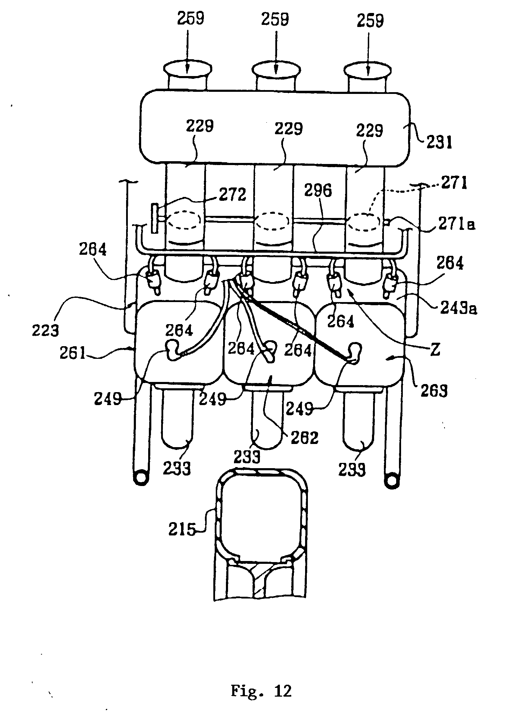

FIG. 12 shows another embodiment of the fuel injection internal combustion engine in a motorcycle in a back view at the same position as that in FIG. 9. In this embodiment, paired injectors 264 opposing each other are attached detachably to the cylinder side wall 243a of each of the first, second and third cylinders 261 - 263. In this embodiment too, while paired injectors 264 are attached to each cylinder 261, 262 or 263, the number of injectors 264 on each cylinder is not limited to two but may be more than two, or at least one at specified position.

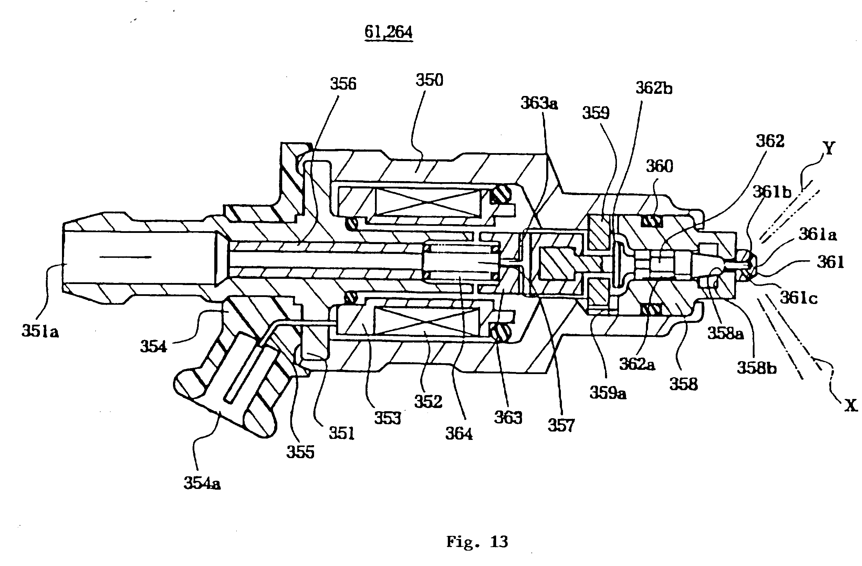

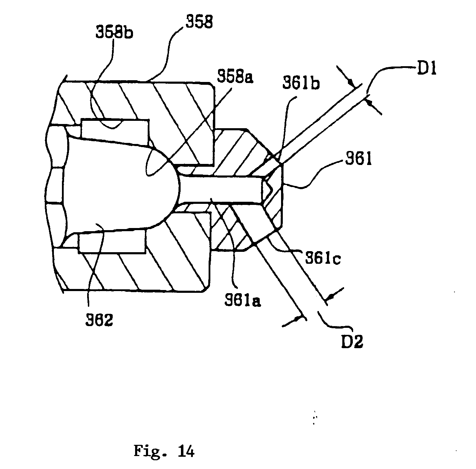

Next, the structure of the injector for use in embodiments of FIGs. 1 - 12 will be described. FIG. 13 is a cross-sectional view of the injector. FIG. 14 is a cross-sectional view of the front end of the injector.

The injector 61, 264 has an injector housing 350. A cap body 351 is fit on the rear end of the injector housing 350. A core 353 with a coil 352 is disposed in the injector housing 350. The cap body 351 is covered with a resin-made cap 354. A connector 354a of the cap 354 is provided with a lead wire 355 connected to the core 353. The lead wire 355 is connected through the connector 354a to a drive power source side. A pipe 356 is inserted into the cap body 351. Fuel supplied from a fuel inlet 351a of the cap body 351 is led through the pipe 356 into a fuel chamber 357 in the injector housing 350.

A needle housing 358 is fit in the front end of the injector housing 350 with a needle stopper 359 interposed in between, and sealed with a seal member 360. A nozzle 361 is fit in the front end of the needle housing 358 and formed with an injection passage 361a. An upward directed injection hole 361b and a downward directed injection hole 361c are formed and connected to the injection passage 361a. The diameter D1 of the upward directed injection hole 361b is made smaller than the diameter D2 of the downward directed injection hole 361c so that the fuel injection amount from the downward directed injection hole 361c is greater than that from the upward directed injection hole 361b.

A needle 362 is movably disposed in the needle housing 358. A movable piece 363 is fixed to the neddle 362. The needle 362 is formed with a fuel passage 362a by cutting. The needle stopper 359 is formed with a fuel passage 359a by cutting. The movable piece 363 is also formed with a fuel passage 363a. A compression spring 364 is interposed between the cap body 351 and the movable piece 363 to force the needle 362 through the movable piece 363 in the direction to close a valve seat 358a of the needle housing 358 so that an injection passage 361a is closed and fuel cannot be injected. When a coil 353 on a core 353 is energized, the movable piece 363 is attracted against the compression spring force by electromagnetic force caused with the coil 352 to open the valve seat and the injection passage 361a, and inject fuel. At this time, a stopper flange 362b formed on the needle 362 comes in contact with the needle stopper 359 to restrict the position of the needle 362.

Since the pressure on the injector 61, 264 is adjusted with an adjustment valve at 600 - 650 kilopascal, when the needle 362 presses the valve seat 358a, the fuel pressure in the fuel storage 358b in the needle housing 358 is also 600 - 650 kilopascal. The farther is the neddle 362 from the valve seat 358a, the greater becomes the flow velocity through the injector 61, 264, and the pressure in the fuel storage 358b lowers. Since the fuel pressure further lowers as the fuel flows from the fuel storage 358b through the space between the needle 362 and the valve seat 358a, the fuel pressure in the injection passage 361a is about a half of that in the fuel storage 358b.

Fuel is injected to the combustion chamber 29, 248 at the flow velocity based on the differential pressure between the injection passage 361a and the combustion chamber 29, 248. The pressure losses in various parts and pressure adjustment valve are set so that the flow velocity at this time is 10 - 30 m/s, preferably about 20 m/s.

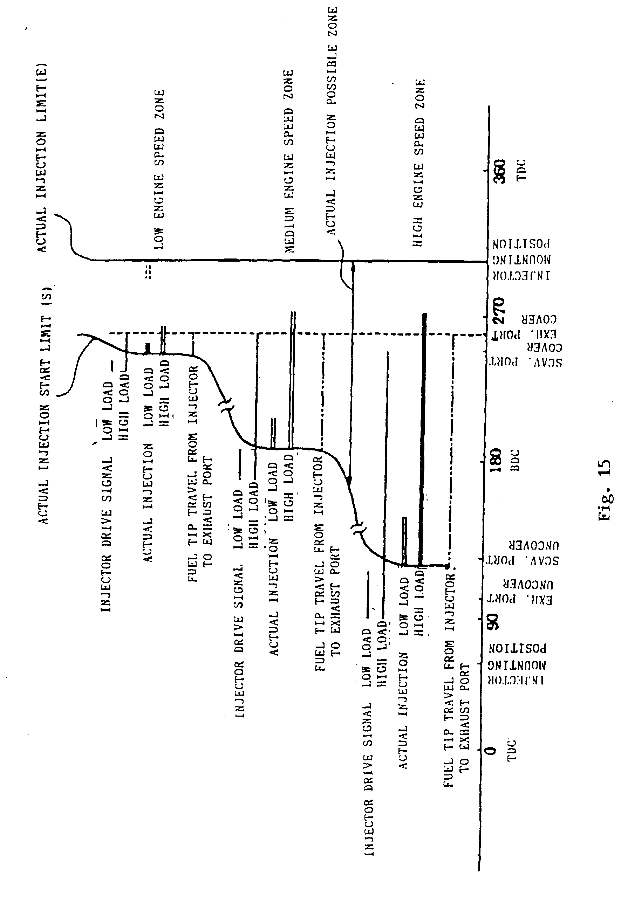

Next, the fuel injection timing of the injector will be described. FIG. 15 is a fuel injection timing chart.

In this fuel injection timing chart, the horizontal axis indicates the crank angles corresponding to the opening and closing of the exhaust port, opening and closing of the scavenging port, and the injector attachment position. The vertical axis indicates the engine speed as the low, medium, and high engine speed zones.

The injector drive signals are indicated with solid lines, with the upper line showing the signal for the low load while the lower line for the high load. The actual fuel injection from the injector is shown with a double line, with the upper line for the low load and the lower line for the high load. The duration for the injected fuel travelling from the injector to the exhaust port is shown with a dash-and-double-dotted line. There is an actuation delay between the injector drive signal and actual actuation of the injector.

The fuel injection timing of the injector varies with the engine speed zones. The actual injection start limit is shown with the curve S and the actual injection limit is shown with the straight line E. The actual available injection range is set with the actual injection start limit curve S and the actual injection limit line E.

In the figure, the length of the dash-and-double-dotted line represents the duration (in crank angle) for the injected fuel travelling from the injector across the combustion chamber to the exhaust port in each of the engine speed zones. Blow-by is prevented by starting injection at a time before the exhaust port closure by the fuel travel time. Such a travel duration is shown with the dash-and-double-dotted line in the figure. The actual injection start limit curve S is produced by connecting the injection start timing capable of preventing the blow-by. When the piston reaches the injector mounting position, the injector is covered with the piston. That timing is the actual injection limit E after which fuel, even if injected, cannot reach the combustion chamber. By the way, the lower the injection speed, the longer becomes the travel time. The nearer is the piston to the exhaust port, the shorter becomes the travel time. When the travel time is the same, concerning the travel period with respect to the crank angle, the lower the engine speed, relatively the shorter the travel period. The longer the travel time, the longer becomes the period from the actual injection start limit to the actual injection limit, and the amount of fuel which can be injected for that period can be increased accordingly. In this embodiment, the injection speed is set to 10 - 30 m/s so that sufficient amount of fuel may be supplied even at high loads.

This embodiment is arranged so that the actual fuel injection is started at the actual injection start limit S and the actual fuel injection is stopped when the required fuel injection amount is reached for all the load range and all the engine speed zones. Therefore, the injection is carried out prior to the ignition made in the vicinity of the top dead center TDC and more uniform mixture is formed. By the way, since the required fuel injection amount increases at high loads, it is arranged that the injection continues after the exhaust port is covered. It may also be arranged that at low loads and low speeds or at the starting time, the actual injection start time is delayed and that the actual injection is finished by the time of the actual injection limit E. The more the actual injection start time is delayed, the more amount of thick mixture which has not been diffused completely remains around the ignition plug. Even with the premixture combustion in which mixture thoroughly mixed by the heat exchange with the piston head is present in the combustion chamber at the time of ignition, almost stratified combustion is possible and stability at low speeds and ease of starting are improved. Such a situation is shown with a double broken line in the figure.

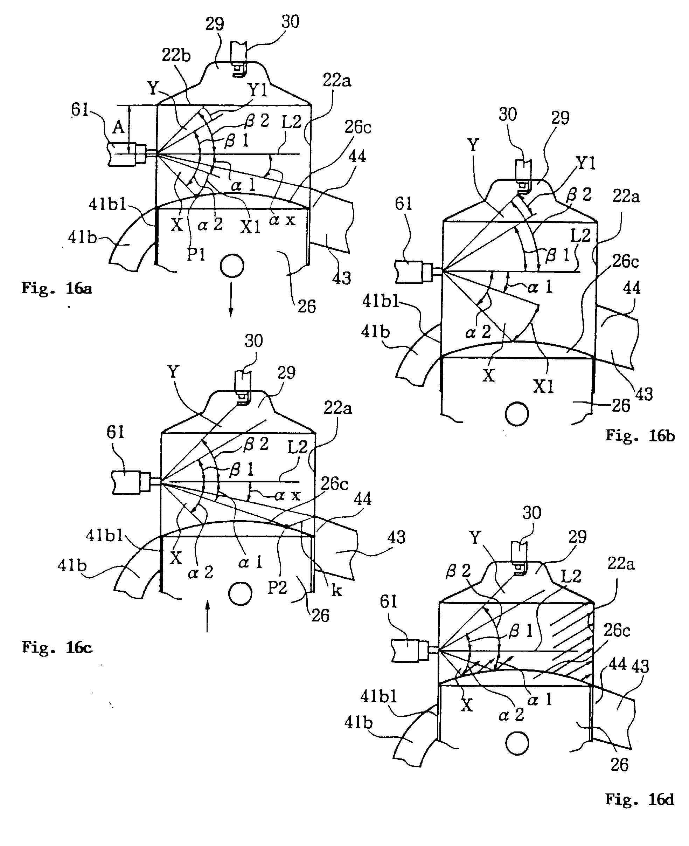

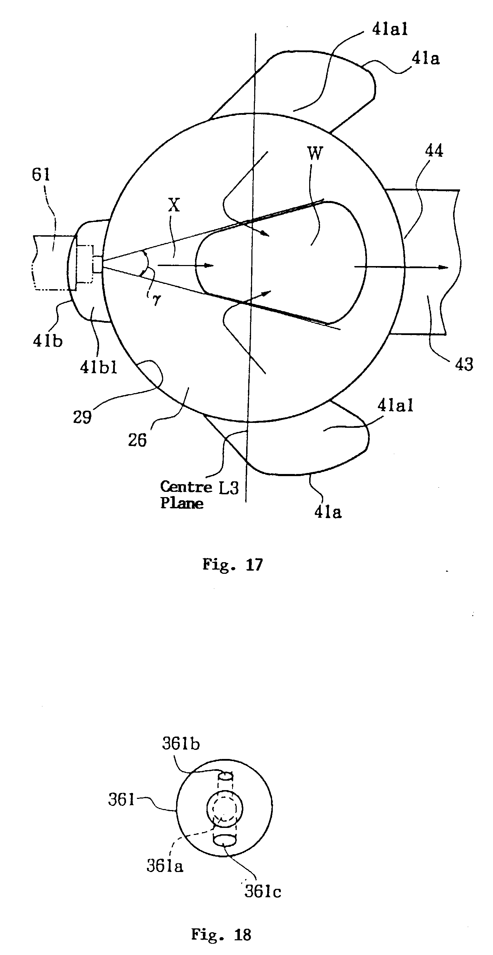

Next, the fuel injection with the embodiment injector shown in FIGs. 1 through 6 will be described in reference to FIGs. 16 through 18. The injection with the embodiment injector shown in FIGs. 7 through 10 is similar to the injection with the injector shown in FIGs. 1 through 6. FIG. 16 shows a schematic cross section of fuel injection with an injector. FIG. 17 is a schematic plan view of the fuel injection with the injector. FIG. 18 shows the position and size of the injection hole of the injector.

The mounting conditions of the injector 61 are shown with the embodiment shown in FIGs. 1 through 6. The structure of the injector 61 is shown in FIGs. 13 and 14, but not limited to it.

Referring to FIG. 16, the injection flows X and Y from the injector 61 are of conical shape. The angles of the downward directed injection flow X are indicated with α1 and α2 relative to the horizontal plane L2 and set smaller than the angle αx between the horizontal plane L2 and a line connecting the injection hole of the injector 61 to the upper end of the exhaust port 44. The angles of the upward directed injection flow Y are indicated with β1 and β2 relative to the horizontal plane L2. The front end surface of the downward directed injection flow X is indicated as X1 and the front end surface of the upward directed injection flow Y is indicated as Y1.

In the state shown in FIG. 16a, fuel injection from the injector 61 is started at a high speed while the piston 26 is descending from the top dead center toward the bottom dead center.

The front end surface X1 of the injection flow X reaches and strikes the descending piston head 26c at the point P1. After that, injection flows of angles smaller than α2 reaches and strikes the descending piston head 26c in succession. FIG. 16b shows a state at a moment when the piston 26 has reached the bottom dead center and is about to change its direction of motion. The injection flow X which has struck the piston 26 is reflected in a different direction.

In the state shown in FIG. 16c, part of the injection flow X at the uppermost boundary angle α1 strikes the piston head 26c, while the piston 26 is ascending toward the top dead center. The travel distance of part of the injection flow X at the uppermost boundary angle α1 from the point P2 to the cylinder side wall 22a in the reflecting direction is k. In the state shown in FIG. 16d, the exhaust port 44 is covered before the earliest of part of the injection flow which has reached and struck the piston head 26c reaches the cylinder side wall 22a or the exhaust port 44.

The injection start timing and the fuel injection angles α1 and α2 are set according to the piston speed (crank radius, engine speed), the distance A from the cylinder top end 22b to the injector mounting position, and the injection flow velocity, so that the exhaust port 44 is covered with the piston 26 whenever the injection flow X reaches the cylinder side wall 22a on the opposite side.

When the piston 26 is descending at high speeds, the fuel injection is started while the exhaust port 44 is still open. The lower becomes the speed, the more delayed is the fuel injection start. Therefore, no blow-by of the front end of the injection flow X into the exhaust port 44 occurs.

The slower is made the injection flow velocity, the earlier may be made the injection start. In this embodiment, the velocity of the injection flow X is set to 10 m/s - 30 m/s.

Furthermore, if the injection start timing is delayed, injection flow velocity is reduced, or the cylinder bore is increased, the fuel injection angle α1 may be further reduced. For instance, the fuel injection angle α1 may be set to O° namely horizontal.

By directing the upward injection flow Y to the piston 26 and delaying the fuel injection start timing at low speeds, thick mixture produced around the piston 26 and at the piston head 26c may be ignited before they are diffused. There is a thin mixture between the piston circumference and the piston head. Thus, a slow combustion is possible in which fire surface advances slowly like a stratified combustion. As a result, stability is improved. By not directing to the piston circumference but upward only, thick mixture may be produced sufficiently in both upper and lower parts of the combustion chamber 29. As a result, pre-mixing is carried out securely through the diffusion of mixture by remaining swirl after scavenging at medium and high speeds.

As shown in FIG. 17, the injector 61 is disposed on the half of the cylinder side wall 22a opposite the exhaust port 44. That is to say, the injector 61 is disposed on the same side as the sub-scavenging port 41b1 of the center plane L3. As shown in FIG. 18 the injector 61 is provided with an injection passage 361a, and an upward directed injection hole 361b and a downward directed injection hole 361c respectively located above and below the injection passage 361a. The upward directed injection hole 361b and the downward directed injection hole 361c have circular cross sections, with the downward directed injection hole 361c having a larger diameter than that of the upward directed injection hole 361b. As a result, fuel amount of the injection flow X directed to the piston head 26c is greater than that of the injection flow Y directed upward of the injector 61. Therefore, combustion heat stagnates on the piston head 26c and makes the piston head 26c a hot spot where vaporization of fuel of the injection flow directed to the piston head 26c is more securely accelerated.

The downward directed injection hole 361c has a circular cross section. In the plan view of FIG. 17 the angle γ of the injection flow X is set by α2 - α1. The area where the injection flow X strikes the piston head 26c is indicated with W. All the injection flow X directed to the piston head 26c strikes the piston head 26c and vaporization of fuel of the injection flow X directed to the piston head 26c is more securely accelerated. By the way, the front end R1 and rear end R2 of the striking area W move toward the injector 61 as the piston 26 ascends. By the way, injection holes 361b and 361c may not have a circular cross section.

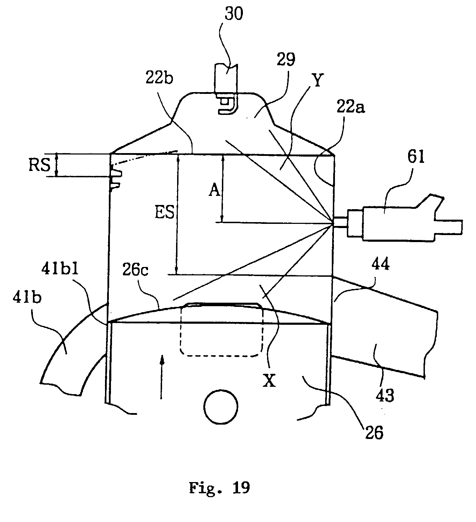

FIG. 19 is a schematic cross section of the fuel injection of another embodiment of the injector. In this embodiment, the mounting position in height direction and the structure of the injector 61 are the same as those shown in FIGs. 13 and 14, the injector 61 is mounted on the exhaust port 44 side so that fuel is injected toward the sub-scavenging port 41b1 and that an additional effect is provided to prevent blow-by of mixture.

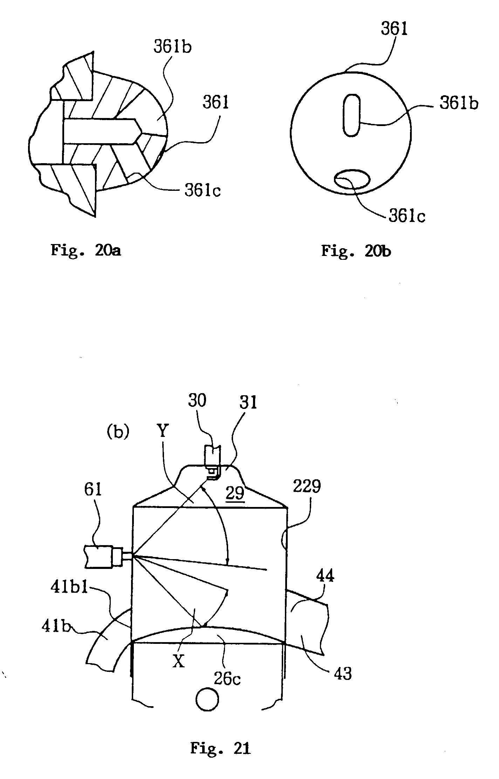

It may also be arranged that part of the injection flow Y directed upward from the injector 61 is directed to a space downward from the injector 61. As an example, FIG. 20 shows a nozzle 361 attached to the tip of the injector 61. As shown in FIG. 20a for a cross section of the nozzle and FIG. 20b for a plan view of the nozzle, the injection hole 361b for the upward directed injection flow Y is elongate in the vertical direction while the injection hole 361c for the downward directed injection flow X is circular. The outlet area of the injection hole 361c for the downward directed injection flow X is equal to or greater than that of the injection hole 361b for the upward directed injection flow Y. With such a setting of the injection holes, as shown in FIG. 21, the upward directed injection flow Y supplies injected fuel over a wide area in vertical directions from the vicinity of the discharging portion 31 of the ignition plug 30 to the zone below the injector 61. Thus, heat is exchanged with the piston head 26c to produce thick mixture in the lower part of the combustion chamber while also producing thick mixture over a vertically wide area in the combustion chamber. After that until ignition, the mixture is diffused to produce uniform mixture in the combustion chamber to make stabilized pre-mixed combustion possible. Thus, output and fuel economy are improved in the medium and high speeds.

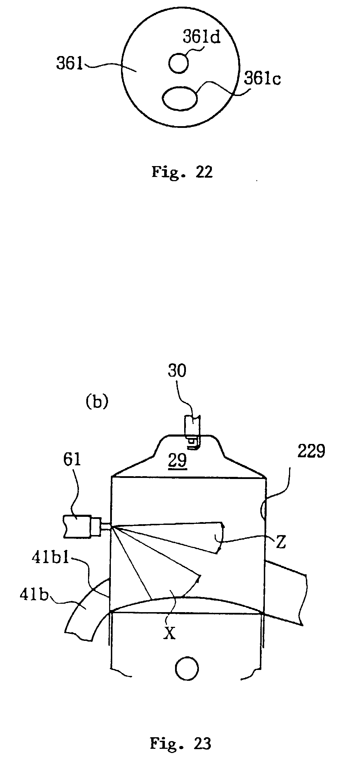

Alternatively as shown in FIG. 22 instead of the injection hole 361b, an injection hole 361d may be provided in the center of the nozzle 361. Thus, as shown in FIG. 23, an injection flow Z is formed for the middle zone of the combustion chamber 29. With this embodiment too, more uniform mixture is produced before ignition in the combustion chamber 29 in comparison with an arrangement in which only the injection hole 361c is provided for the downward directed injection flow X.

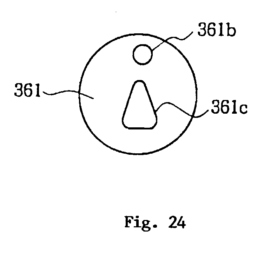

In the embodiment shown in FIG. 24, the injection hole 361c for the downward directed injection flow X is formed in a vertically elongate shape to supply fuel also to the middle zone in the combustion chamber 29. In this embodiment too, like the embodiment shown in FIGs. 20 and 21, it is made possible to produce thick mixture over a wide range in vertical directions in the combustion chamber. After that until ignition, the mixture is diffused to produce uniform mixture in the combustion chamber to make stabilized pre-mixed combustion possible.

While the above embodiments are described about the two stroke cycle engine, this invention is also applicable to four stroke cycle engines performing the intake, compression, ignition, and explosion strokes. That is to say, fuel is injected from the injector 61 mounted on the cylinder side wall during the period from when the injector 61 is uncovered with the piston 26 in the intake stroke to when the injector 61 is covered with the piston 26 in the compression stroke to produce the upward directed injection flow Y directed to the discharging portion 31 of the ignition plug 30 and the downward directed injection flow X directed to the piston head 26c of the piston 26. Thus, like in the case of the two cycle engine described above, injection pressure is prevented from lowering, the injector 61 is prevented from being exposed to the combustion gas of high temperature and high pressure in the early period of the combustion stroke, vaporization of fuel is accelerated with the piston 26, thick mixture is produced by the upward directed injection flow Y, and uniform pre-mixed state is produced over the combustion chamber before ignition. Furthermore, by increasing the flow rate of the downward directed injection flow X relative to the upward directed injection flow Y, overall acceleration of vaporization of injected fuel is possible.

As described above, fuel injection from the injector is branched into two injection flows with one injection flow directed to the piston head and the other directed more upward than the one injection flow. As a result, fuel of the injection flow directed to the piston head where combustion heat stagnates is accelerated to evaporate. The injection flow directed more upward than the other injection flow produces thick mixture in the upper part of the combustion chamber. As a result, uniform mixture is produced over the combustion chamber. Thus, pre-mixed combustion occurs efficiently to provide stabilized and less fuel-consuming combustion in medium and high speeds.

Since the angle of the injection flow directed to the piston head is set so that all the injection flow strikes the piston head, fuel of the injection flow directed to the piston head is more securely accelerated to evaporate. Thus, pre-mixed combustion occurs efficiently to provide stabilized and less fuel-consuming combustion in medium and high speeds.

Further, since the amount of fuel of the injection flow directed to the piston head is made greater than that of the injection flow directed upward, vaporization of fuel in the injection flow directed to the piston head which is made a hot spot by the stagnation of heat is accelerated more securely. Thus, pre-mixed combustion occurs efficiently to provide stabilized and less fuel-consuming combustion in medium and high speeds.

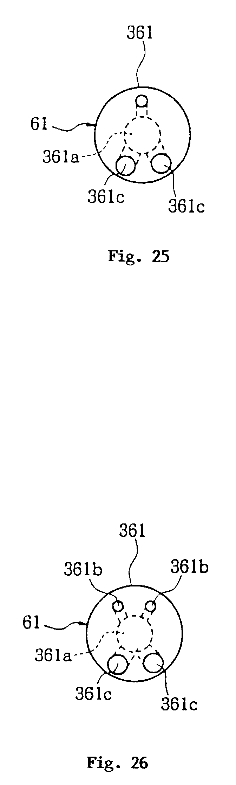

FIGs. 25 and 26 show another embodiment of positions and sizes of the injector holes of the injector. In the embodiment shown in FIG. 25 the injector 61 is provided with an injection passage 361a, an injection hole 361b located above the injection passage 361a as seen in the drawing, and two injection holes 361c below the injection passage 361a. The upward directed injection flow Y from the upper injection hole 361b flows upward from the injector 61 and the downward directed injection flows X from the two lower injection holes 361c flow toward the piston head 26c. In the embodiment shown in FIG. 14, the injector 61 is provided with an injection passage 361a, two injection holes 361b located above the injection passage 361a as seen in the drawing, and two injection holes 361c below the injection passage 361a. The upward directed injection flow Y from the two upper injection hole 361b flow upward from the injector 61 and the downward directed injection flows X from the two lower injection holes 361c flow toward the piston head 26c.

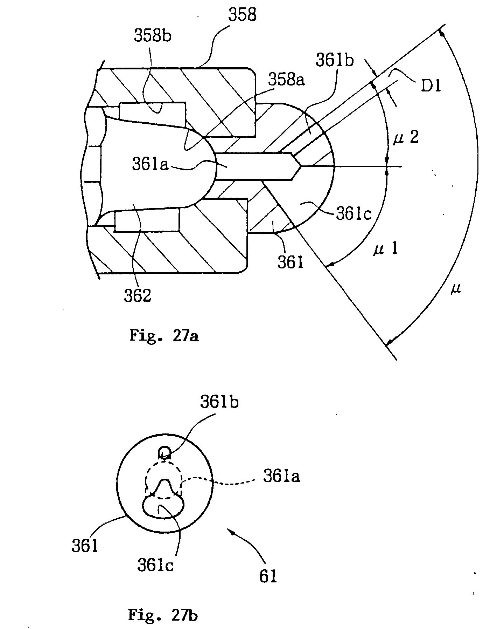

FIG. 27 shows still another embodiment of position and size of the injector holes of the injector. In this embodiment, like the embodiment shown in FIG. 18, the injector 61 is provided with an injection passage 361a, an injection hole 361b located above the injection passage 361a as seen in the drawing, and an injection hole 361e below the injection passage 361a. The upper injection hole 361b is formed with a circular cross section while the lower injection hole 361c is formed with the angle µ1 relative to the center line of the injection passage 361a with a generally triangular cross section with the upper side narrow and the lower side wide so that more fuel is injected toward the piston head 26c while fuel is also supplied in the intermediate zone between the ignition plug 30 and the piston head 26c.

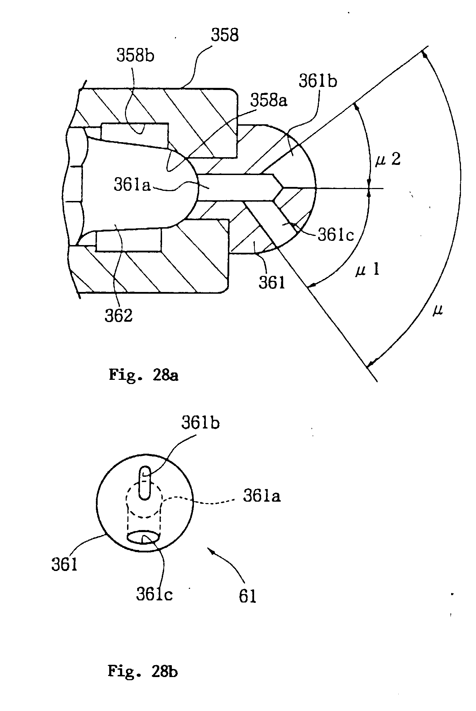

FIG. 28 shows still another embodiment of position and size of the injector holes of the injector. In this embodiment, like the embodiment shown in FIG. 18, the injector 61 is provided with an injection passage 361a, an injection hole 361b located above the injection passage 361a as seen in the drawing and an injection hole 361c below the injection passage 361a. The lower injection hole 361c is formed with a circular cross section while the upper injection hole 361b is formed with the angle µ2 relative to the center line of the injection passage 361a with a vertically elongate cross section so that fuel can be injected from the upper injection hole 361b over a wide area extending from the discharging portion 31 of the ignition plug 30 to the intermediate zone described above. The cross-sectional area of the lower injection hole 361c is made greater than the minimum cross-sectional area (immediate vicinity of the injection passage 361a) of the upper injection hole 361b so that more amount of fuel can be injected toward the piston head 26c.

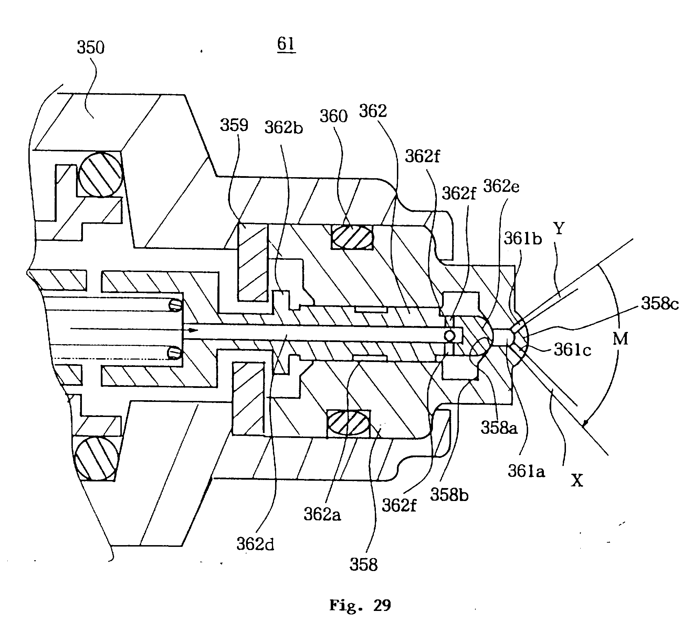

FIG. 29 shows a cross section of another embodiment of the injector. In this embodiment, a needle 362 is disposed in a needle housing 358. A fuel passage 362d is formed through the needle 362. A plural number of fuel supply holes 362f are formed in the tip portion 362e of the needle 362. The needle housing 358 is also formed with an integral nozzle portion 358c. An upward directed injection hole 361b and a downward directed injection hole 361c are formed and connected to the injection passage 361a formed in the nozzle portion 358c to enable smooth fuel injection with a simple structure.

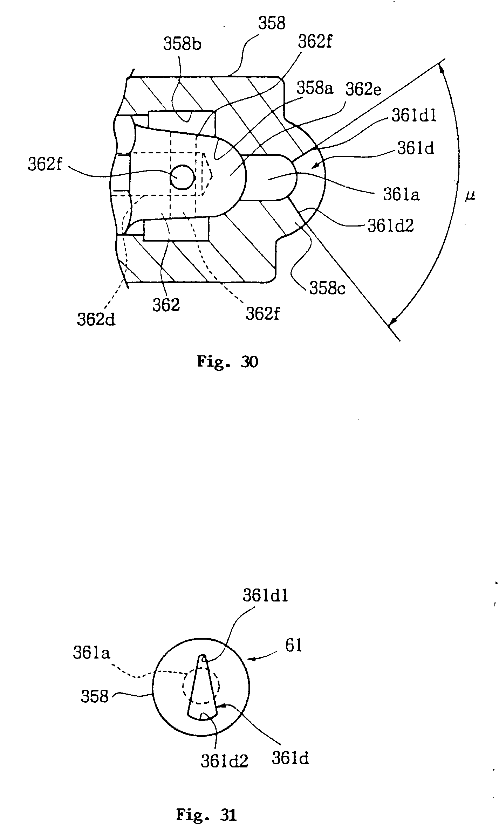

FIG. 29 shows a cross section of still another embodiment of the injector. In this embodiment an injection hole 361d is formed and connected to the injection hole 361a of the needle housing 358. The injection hole 361d is formed with the angle µ between both injection hole walls 361d1, 361d2 on both ends in the longitudinal direction of the cylinder being not less than 45 degrees, and with the extension line of one 361d2 of the injection hole walls 361d1, 361d2 on both sides which is more distant from the cylinder head 23 intersects the piston head 26c. FIG. 31 is a front view of the nozzle portion 358c.

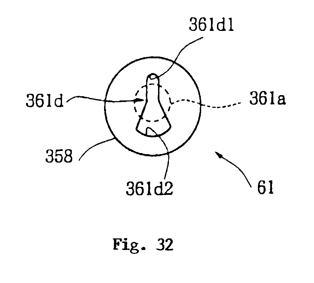

FIG. 32 is a front view of still another embodiment of the injection holes of the injector. The injection hole 361d of the embodiment shown in FIG. 20 is formed similarly to the injection hole 361d of the injector 61 shown in FIG. 30. The injection hole 361d of the embodiment shown in FIG. 31 is formed in an elongate sector shape as seen in front view with the lower injection hole wall 361d2 greater than the upper injection hole wall 361d1. The injection hole 361d of the embodiment shown in FIG. 20 is formed in a shape made by connecting the upper elongate hole to the lower sector as seen in front view with the lower injection hole wall 361d2 greater than the upper injection hole wall 361d1.

With the two embodiments shown in FIGs. 30 through 32, a large amount of fuel can be supplied to the piston head 26c while supplying fuel to the aforementioned intermediate zone by the use of the single injection hole 361d and also toward the discharging portion 31 if the angle µ is enlarged, so that vaporization of fuel is reliably accelerated.

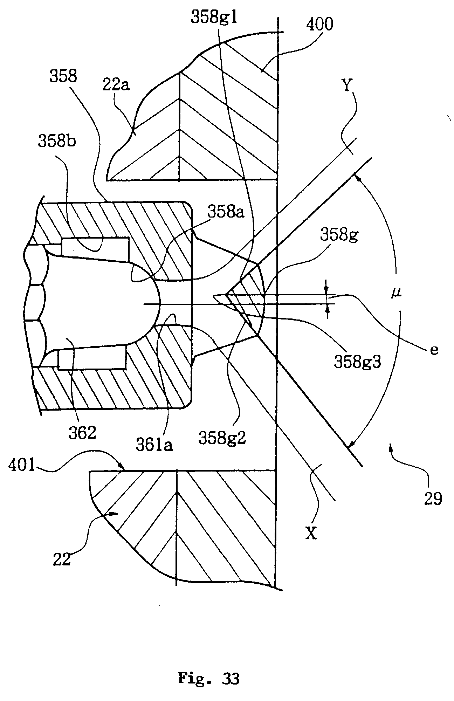

FIG. 33 shows a cross section of still another embodiment of the injection holes of the injector. In this embodiment, the tip portion of the injector 61 is located in a nozzle hole 401 formed through the cylinder side wall 22a and a sleeve 400 to face the combustion chamber 29. An arch-shaped injection flow guide 358g is integrally formed at the tip portion of the needle housing 358 of the injector 61 opposite the injection passage 361a. The injection flow guide 358g is formed with guide surfaces 358g1, 358g2 for branching the injection flow into the upward directed injection flow Y and the downward directed injection flow X as seen in the drawing. These guide surfaces 358g1, 358g2 define the angle µ between the injection hole walls on both ends in the longitudinal direction of the cylinder to be not less than 45 degrees. The branching portion 358g of the guide surfaces 358g1, 358g2 is displaced upward from the center of the injection passage 361a as seen in the drawing so that more amount of fuel flows in the downward directed injection flow X than in the upward directed injection flow Y.

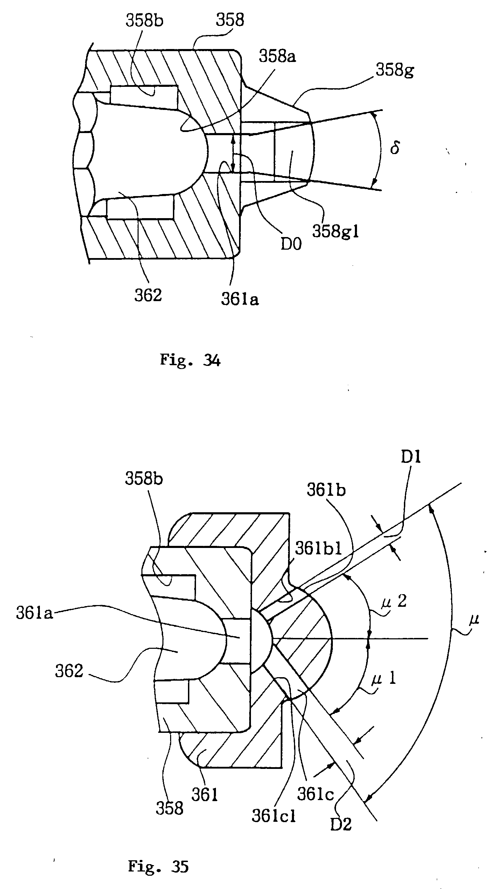

FIG. 34 shows a cross section of the injector taken in a plane intersecting the cross section of FIG. 21 at right angles, the injection flow Y from the outlet of the injection passage 361a is curved to expand by the guide surface 358g1 and directed toward the discharging portion 31 while expanding further. The angle of expansion is δ. The angle of expansion δ is greater in the downward directed injection flow X than in the upward directed injection flow Y.

FIG. 35 shows a cross section of still another embodiment. This embodiment is different from the embodiment shown in FIG. 14 in that the nozzle 361 is fit over the tip of the needle housing 358 and caulked. This increases the attachment strength of the nozzle 361 to the needle housing 358.

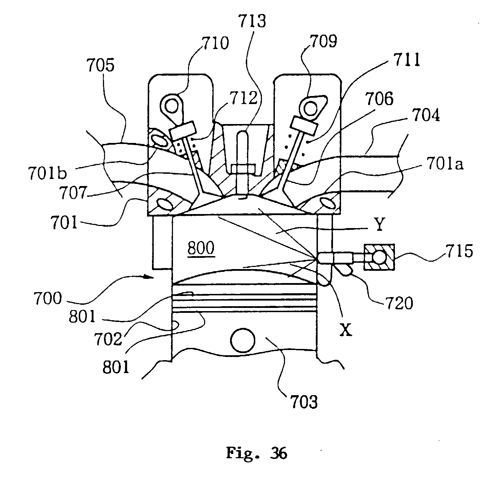

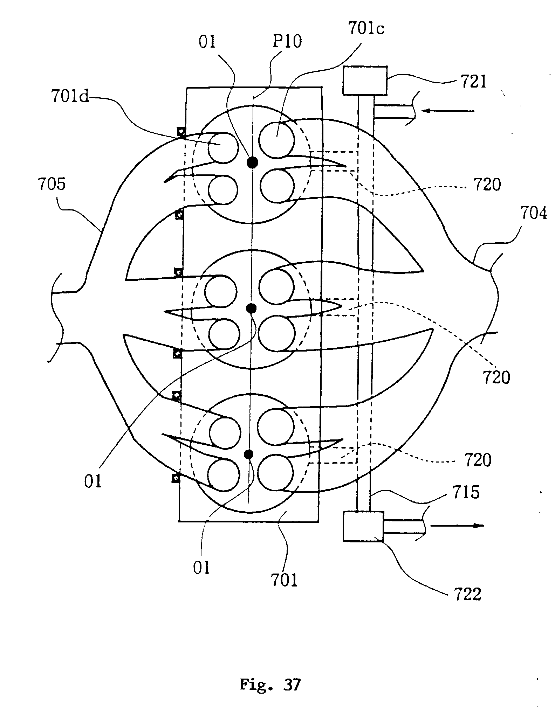

FIGs. 36 and 37 show an embodiment in a four cycle engine. FIG. 36 shows a cross section for a cylinder. FIG. 37 is a plan view of the engine. A cylinder head 701 is placed on a cylinder block 700. A sliding piston 703 is housed in a cylinder 702. The inside of the cylinder 701 is provided with two intake passages 701a and two exhaust passages 701b. The underside opening ends of the cylinder head 701 are made as an intake port 701c and an exhaust port 701d. The other opening ends are connected to an intake manifold 704 and an exhaust manifold 705, respectively. Each intake port 701c is provided with an intake valve 706 opened and closed while resisting a valve spring 711. Each exhaust port 701d is provided with an exhaust valve 707 opened and closed while resisting a valve spring 712. An ignition plug 713 is disposed in each cylinder center O1 of the cylinder head 701.

A fuel distribution pipe 715 is disposed parallel to a common plane P10 which passes respective cylinder centers 01. Injectors 720 disposed parallel to each other on the side walls of the cylinders 702 are connected directly to the fuel distribution pipe 715. A fuel pressure damper 721 for absorbing fuel pressure variation is disposed on the upstream end of the fuel distribution pipe 715. A pressure regulator valve 722 for keeping the injection pressure constant is disposed on the downstream end of the fuel distribution pipe 715.

Fuel injection from the injector 720 is started after the intake valve 706 is opened and the piston 703 passes the injector 720 mounting point. The upward directed injection flow Y is directed toward the area from the exhaust valve 707 to the discharging portion of the ignition plug 713 and the downward directed injection flow X is directed toward the head of the piston 703. As a result, the injected fuel exchanges heat with the piston head and the exhaust valve 707 and vaporizes to produce uniform mixture in the combustion chamber 800 before being ignited at a timing when the piston 703 is in the vicinity of the top dead center.

Piston rings 801 fit to the piston 703. The injector 720 is disposed at a position nearer to the crank chamber (not shown) than to the upper piston ring 801 as it is located when the ignition plug 713 ignites so that the injector 720 is protected from high temperature, high pressure combustion gas immediately after ignition.

Also in this embodiment, fuel supply system is simplified, and the injectors 720 and the fuel distribution pipe 715 are covered and protected with the intake manifold 704.

As described above, the injector nozzle is provided with one or more injection holes, the injection valve to be opened and closed with the needle is disposed on the upstream side of the injection holes of the injector, the extension line or one of the injection hole walls on both ends which is more distance from the cylinder head intersects the piston head when the fuel injection from the injector is over, at least part of the injection flow strikes the piston head during the injection period to exchange heat with the piston head and accelerate vaporization of the fuel directed to the piston head, mixture in the upper part of the combustion chamber is made thick by the injection flow directed above the injector, mixture in the entire combustion chamber is made uniform, pre-mixed combustion is efficiently produced, and stabilized, fuel-economy combustion is obtained at medium and high speeds.

Since the injector is mounted on the cylinder side wall and the angle between the injection hole walls on both ends in the longitudinal direction of the cylinder is 45 degrees or more, fuel is injected to areas in the combustion chamber other than the piston head, fuel-air mixture is produced over the entire combustion chamber, combustion is stabilized, performance is improved, fuel economy is improved, and the revolution is stabilized.

## Claims

1. Internal combustion engine (10; 223) comprising at least one cylinder body (22; 243) a top end (22b) of which being covered by a cylinder head (23; 224), said cylinder body (22; 243) accommodating a slidingly reciprocatable piston (26; 245) having at least one ring groove (26a, 26b) for accommodating at least one piston ring (521, 522) and at least one fuel injector (61; 264) located within a cylinder side wall (22a; 243a) at a first distance A to said top end (22b) of said cylinder body (22; 243) which is greater than a second distance RS, wherein RS is a second distance between said top end (22b) of said cylinder body (22, 243) and the lower end of said ring groove (26a, 26b) of said piston (26; 245) when it is at a top dead center position, **characterized in that** for said top dead center position of the piston (26; 245) the following inequation does apply RS < A < 0.3L, wherein L is a third distance between said top end (22b) of said cylinder body (22; 243) and the top circumference of said piston (26; 245) when it is in a bottom dead center position.

2. Internal combustion engine according to claim 1, **characterized in that** said injector (61; 264) is connected to first and second fuel pumps (64, 65).

3. Internal combustion engine according to claim 1 or 2, **characterized in that** said injector (61; 264) is an electromagnetic injector.

4. Internal combustion engine according to at least one of claims 1 to 3, **characterized by** an engine control device (73; 257) for controlling said injector (61; 264) on the basis of detected engine operating conditions.

5. Internal combustion engine according to claim 4, **characterized in that** said engine operating conditions is one or a combination of a crank angle, a crankcase inside pressure, a cylinder inside pressure, knocking of the engine, intake air temperature, a throttle opening, an intake pressure, a cylinder temperature, an atmospheric pressure, a coolant temperature and an engine speed.

6. Internal combustion engine according to at least one of claims 1 to 5, **characterized in that** said injector (61; 264) comprises an injection passage (361a) directed transversely to the cylinder axis and leading to at least one injection hole (361d) having an opening angle (µ) of at least 45° along the cylinder axis.

7. Internal combustion engine according to claim 6, **characterized in that** the cross-sectional area of said injection hole (361d) increases beginning from the cylinder head side to the piston side.

8. Internal combustion engine according to claim 6, **characterized in that** said injection hole (361d) has an elongate sector at the cylinder head side changing to a conically shaped sector at the piston side.

9. Internal combustion engine according to at least one of claims 1 to 5, **characterized in that** said injector (61; 264) comprises an injection passage (361a) directed transversely to the cylinder axis and branching off into at least two injection holes (361b, 361c) the upper (361b) of which directed to the cylinder head side and the lower (361c) of which directed to the piston side.

10. Internal combustion engine according to claim 9, **characterized in that** the cross-section of the upper injection hole (361b) is smaller than the cross-section of the lower injection hole (361c).

11. Internal combustion engine according to claim 10, **characterized in that** the upper injection hole (361b) has an elongate cross-section along the cylinder axis and that the lower injection hole (361c) has a circular cross-section.

12. Internal combustion engine according to claim 10, **characterized in that** the upper injection hole (361b) has a main injection direction transversely to the cylinder axis.

13. Internal combustion engine according to claim 10, **characterized in that** the upper injection hole (361b) has a circular cross-section whereas the lower injection hole (361c) has an elongate cross-section along the cylinder axis.

14. Internal combustion engine according to claim 9, **characterized by** a second lower injection hole (361c).

15. Internal combustion engine according to claim 14, **characterized by** a second upper injection hole (361b).

16. Internal combustion engine according to claim 9, **characterized in that** the upper injection hole (361b) has a circular cross-section whereas the lower injection hole (361c) has an opening angle (µ1) along the cylinder axis with respect to the center line of said injection passage (361a) and a generally triangular cross-section with a narrow portion adjacent said centre line of said injection passage (361a) and a wider portion at the piston side.

17. Internal combustion engine according to one of claims 6 to 16, **characterized in that** said injector (61; 264) comprises a needle (362) disposed within a needle housing (358), further a fuel passage (362d) formed within said needle (362), a plurality of fuel supply holes (362f) in a tip portion of said needle (362), and an integral nozzle portion (358c) provided with the respective injection holes (361b, 361c).

18. Internal combustion engine according to claim 9, **characterized in that** a tip portion of said injector (61; 264) is located in a nozzle hole (401) formed through said cylinder side wall (22a), said injector (61, 264) has an integrally formed arch-shaped injection flow guide (358g), said injection flow guide (358g) is provided with guide surfaces (358g1, 358g2) for branching the injection flow into an upward injection flow (Y) to said cylinder head (23; 224) and a downward injection flow (X) to said piston (26; 245) said guide surfaces (358g1, 358g2) defining an opening angle (µ) in cylinder axis direction of at least 45°.

19. Internal combustion engine according to claim 18, **characterized in that** said injection flow guide (358g) is offset from the center line of said injection passage (361a) toward the cylinder head (23; 224) and in addition defines an expansion angle (δ) transverse to said cylinder axis.

20. Internal combustion engine according to one of claims 1 to 19, **characterized by** a further injector (61; 264) for said at least one cylinder body (22; 243).

21. Internal combustion engine according to one of claims 1 to 20, **characterized in that** said internal combustion engine is a four-stroke cycle internal combustion engine.

22. Internal combustion engine according to one of claims 1 to 20, **characterized in that** said internal combustion engine is a two-stroke cycle internal combustion engine (10; 223) comprising at least one exhaust port (44; 254) and at least one scavenging port (41b1) opposing each other and that a fourth distance ES between said top end (22b) of said cylinder body (22; 243) and said exhaust port (44; 254) fulfils the following inequation:$\text{0.35 ES < A < 0.65 ES.}$

23. Internal combustion engine according to claim 22, **characterized in that** said injector or said injectors (61; 264) oppose said exhaust port (44; 254) or said scavenging port (41b1).

24. Internal combustion engine according to one of claims 3 to 23, **characterized in that** said injector (61; 264) comprises a cap body (351) fitted on the exterior side of an injector housing (350), a core (353) provided with a coil (352) within said housing (350), a needle housing (358) fitted to the interior side of said housing (350), and a nozzle (361) at the interior side of said housing (358) having an injection passage (361a) leading to respective injection holes (361b, 362c).

25. Internal combustion engine according to claim 24, **characterized in that** said injector (61; 264) is capable of injecting fuel with a flow velocity of 10m/s to 30m/s.

## Patentansprüche

1. Brennkraftmaschine (10; 232) mit zumindest einem Zylinderkörper (22; 243), von dem ein oberes Ende (22b) mit einem Zylinderkopf (23, 224) abgedeckt ist, wobei dieser Zylinderkörper (22; 243) einen gleitend hin- und herbewegbaren Kolben (26; 245) aufnimmt, der zumindest eine Ringrinne (26a, 26b) aufweist zur Aufnahme von zumindest einem Kolbenring (521, 522), und mit zumindest einem Kraftstoffeinspritzer (61; 264), der innerhalb der Zylinderseitenwandung (22a; 243a) mit einer ersten Distanz (A) zu dem oberen Ende (22b) von diesem Zylinderkörper (22; 243) angeordnet ist, welche größer ist als eine zweite Distanz (RS), wobei (RS) eine zweite Distanz ist zwischen diesem oberen Ende (22b) von diesem Zylinderkörper (22; 243) und dem unteren Ende von dieser Ringrinne (26a, 26b) von diesem Kolben (26; 245), wenn er sich in der Position seines oberen Totpunktes befindet, **dadurch gekennzeichnet**, daß für diese Position des oberen Totpunktes des Kolbens (26; 245) die folgende Ungleichung gilt: RS < A < 0,3 L, worin L eine dritte Distanz ist zwischen diesem oberen Ende (22b) von diesem Zylinderkörper (22; 243) und dem oberen Umfangsrand von diesem Kolben (26; 245), wenn er sich in der Position seines unteren Totpunktes befindet.

2. Brennkraftmaschine nach Anspruch 1, **dadurch gekennzeichnet**, daß dieser Einspritzer (61; 264) an erste und zweite Kraftstoffpumpen (64, 65) angeschlossen ist.

3. Brennkraftmaschine nach Anspruch 1 oder 2, **dadurch gekennzeichnet**, daß dieser Einspritzer (61; 264) ein elektromagnetischer Einspritzer ist.

4. Brennkraftmaschine nach zumindest einem der Ansprüche 1 bis 3, **gekennzeichnet durch** eine Motorsteuereinrichtung (73; 257) zur Steuerung dieses Einspritzers (61; 264) auf der Grundlage von erfaßten Motorbetriebszuständen.

5. Brennkraftmaschine nach Anspruch 4, **dadurch gekennzeichnet**, daß diese Motorbetriebszustände einer oder eine Kombination von einem Kurbelwinkel, einem Kurbelgehäuseinnendruck, einem Zylinderinnendruck, einem Klopfen des Motors, einer Ansauglufttemperatur, einer Drosselöffnung, eines Ansaugdruckes, einer Zylindertemperatur, eines atmosphärischen Druckes, einer Kühlmitteltemperatur und einer Motorgeschwindigkeit ist.

6. Brennkraftmaschine nach zumindest einem der Ansprüche 1 bis 5, **dadurch gekennzeichnet**, daß dieser Einspritzer (61; 264) einen Einspritzkanal (361a) enthält, der transversal zu der Zylinderachse gerichtet ist und zumindest zu einem Einspritzloch (361d) führt, welches einen Öffnungswinkel (µ) von zumindest 45° entlang der Zylinderachse aufweist.

7. Brennkraftmaschine nach Anspruch 6, **dadurch gekennzeichnet**, daß der Querschnittsbereich von diesem Einspritzloch (361d), beginnend von der Zylinderkopfseite in Richtung auf die Kolbenseite größer wird.

8. Brennkraftmaschine nach Anspruch 6, **dadurch gekennzeichnet**, daß dieses Einspritzloch (361d) bei der Zylinderkopfseite einen langgestreckten Sektor aufweist, der sich zu einem konisch geformten Sektor bei der Kolbenseite ändert.

9. Brennkraftmaschine nach zumindest einem der Ansprüche 1 bis 5, **dadurch gekennzeichnet**, daß dieser Einspritzer (61; 264) einen Einspritzkanal (361a) aufweist, der transversal zu der Zylinderachse gerichtet ist und sich in zumindest zwei Einspritzlöcher (361b, 361c) aufteilt, wobei das obere (361b) von diesen zu der Zylinderkopfseite gerichtet ist und das untere (361c) von diesen zu der Kolbenseite gerichtet ist.

10. Brennkraftmaschine nach Anspruch 9, **dadurch gekennzeichnet**, daß der Querschnitt des oberen Einspritzloches (361b) kleiner als der Querschnitt des unteren Einspritzloches (361c) ist.

11. Brennkraftmaschine nach Anspruch 10, **dadurch gekennzeichnet**, daß das obere Einspritzloch (361b) entlang der Zylinderachse einen langgestreckten Querschnitt aufweist, und daß das untere Einspritzloch (361c) einen kreisförmigen Querschnitt aufweist.

12. Brennkraftmaschine nach Anspruch 10, **dadurch gekennzeichnet**, daß das obere Einspritzloch (361b) eine Haupteinspritzrichtung aufweist, die transversal zu der Zylinderachse verläuft.

13. Brennkraftmaschine nach Anspruch 10, **dadurch gekennzeichnet**, daß das obere Einspritzloch (361b) einen kreisförmigen Querschnitt aufweist, wohingegen das untere Einspritzloch (361c) entlang der Zylinderachse einen langgestreckten Querschnitt aufweist.

14. Brennkraftmaschine nach Anspruch 9, **gekennzeichnet durch** ein zweites unteres Einspritzloch (361c).

15. Brennkraftmaschine nach Anspruch 14, **gekennzeichnet durch** ein zweites oberes Einspritzloch (361b).

16. Brennkraftmaschine nach Anspruch 9, **dadurch gekennzeichnet**, daß das obere Einspritzloch (361b) einen kreisförmigen Querschnitt aufweist, wohingegen das untere Einspritzloch (361c) bezüglich der Mittellinie von diesem Einspritzkanal (361a) entlang der Zylinderachse einen Öffnungswinkel (µ1) aufweist und einen allgemein dreieckförmigen Querschnitt enthält mit einem engen Abschnitt, der an dieser Mittellinie von diesem Einspritzkanal (361a) angrenzt, und einen weiteren Abschnitt, der bei der Kolbenseite angeordnet ist.

17. Brennkraftmaschine nach einem der Ansprüche 6 bis 16, **dadurch gekennzeichnet**, daß der Einspritzer (61; 264) eine Nadel (362) enthält, die innerhalb eines Nadelgehäuses (358) angeordnet ist, des weiteren einen Kraftstoffkanal (362d) enthält, der innerhalb der Nadel (362) ausgebildet ist, eine Vielzahl von Kraftstoffzuführungslöchern (362f) in einem spitzen Abschnitt von dieser Nadel (362) aufweist und einen einstückigen Düsenabschnitt (358c) enthält, der mit den entsprechenden Einspritzlöchern (361b, 361c) versehen ist.

18. Brennkraftmaschine nach Anspruch 9, **dadurch gekennzeichnet**, daß ein Spitzenabschnitt von diesem Einspritzer (61; 264) in einem Düsenloch (401) angeordnet ist, das durch diese Zylinderseitenwandung (22a) hindurch ausgebildet ist, daß dieser Einspritzer (61; 264) eine einstückig ausgebildete, bogenförmige Einspritzflußführung (358g) aufweist, wobei diese Einspritzflußführung (358g) mit Führungsoberflächen (358g1, 358g2) versehen ist zur Aufteilung des Einspritzflusses in einen aufwärts gerichteten Einspritzfluß (Y) in Richtung auf den Zylinderkopf (23; 224) und einen nach unten gerichteten Einspritzfluß (X) in Richtung auf diesen Kolben (26; 245), wobei diese Führungsoberflächen (358g1, 358g2) einen Öffnungswinkel (µ) in Richtung der Zylinderachse von zumindest 45° festlegen.

19. Brennkraftmaschine nach Anspruch 18, **dadurch gekennzeichnet**, daß diese Einspritzflußführung (358g) von der Mittellinie von diesem Einspritzkanal (361a) in Richtung auf den Zylinderkopf (23; 224) versetzt ist und zusätzlich einen Ausbreitungswinkel (δ) festlegt, der transversal zu dieser Zylinderachse verläuft.

20. Brennkraftmaschine nach einem der Ansprüche 1 bis 19, **gekennzeichnet durch** einen weiteren Einspritzer (61; 264) für diesen zumindest einen Zylinderkörper (22; 243).

21. Brennkraftmaschine nach einem der Ansprüche 1 bis 20, **dadurch gekennzeichnet**, daß diese Brennkraftmaschine eine Viertakt-Brennkraftmaschine ist.

22. Brennkraftmaschine nach zumindest einem der Ansprüche 1 bis 20, **dadurch gekennzeichnet**, daß diese Brennkraftmaschine eine Zweitakt-Brennkraftmaschine (10; 223) ist, mit zumindest einer Auslaßöffnung (44; 254) und zumindest einer Spülöffnung (41b1), die einander gegenüberliegen, und daß eine vierte Distanz (ES) zwischen diesem oberen Ende (22b) von diesem Zylinderkörper (22; 243) und dieser Auslaßöffnung (44; 254) die folgende Ungleichung erfüllt;$\text{0,35 S < A < 0,65 ES.}$

23. Brennkraftmaschine nach Anspruch 22, **dadurch gekennzeichnet**, daß dieser Einspritzer oder diese Einspritzer (61; 264) dieser Auslaßöffnung (44; 254) oder dieser Spülöffnung (41b1) gegenüberliegt bzw. gegenüberliegen.

24. Brennkraftmaschine nach einem der Ansprüche 3 bis 23, **dadurch gekennzeichnet**, daß dieser Einspritzer (61; 264) einen Kappenkörper (351) aufweist, der an der Außenseite von einem Einspritzergehäuse (350) befestigt ist, daß ein Kern (353) mit einer Spule (352) innerhalb dieses Gehäuse (350) angeordnet ist, daß ein Nadelgehäuse (358) an der inneren Seite von diesem Gehäuse (350) befestigt ist, und daß eine Düse (361) an der inneren Seite von diesem Gehäuse (358) einen Einspritzkanal (361a) aufweist, der zu den entsprechenden Einspritzlöchern (361b, 362c) führt.

25. Brennkraftmaschine nach Anspruch 24, **dadurch gekennzeichnet**, daß dieser Einspritzer (61; 264) in der Lage ist, Kraftstoff mit einer Fließgeschwindigkeit von 10m/s bis 30m/s einzuspritzen.

## Revendications

1. Un moteur à combustion interne (10; 223) comprenant au moins un corps de cylindre (22; 243) dont une extrémité supérieure (22b) est couverte par une culasse (23; 224), ledit corps de cylindre (22; 243) recevant un piston (26; 245) susceptible d'effectuer un mouvement alternatif, ayant au moins une gorge annulaire (26a, 26b) destinée à recevoir au moins un segment de piston (521, 522) et au moins un injecteur de carburant (61, 264) placé à l'intérieur d'une paroi latérale de cylindre (22a; 243a) à une première distance A vis-à-vis de ladite extrémité supérieure (22b) dudit corps de cylindre (22; 243), supérieure à une deuxième RS, RS étant une deuxième distance mesurée entre ladite partie supérieure (22b) dudit corps de cylindre (22; 243) et l'extrémité inférieure de ladite gorge annulaire (26a, 26b) dudit piston (26; 245) lorsqu'il se trouve à sa position de point mort haut, caractérisé en ce que pour ladite position de point mort haut du piston (26; 245) s'applique l'inéquation ci-après RS < A < 0,31, dans laquelle L est une troisième distance mesurée entre ladite extrémité supérieure (22b) dudit corps de cylindre (22; 243) et la circonférence supérieure audit piston (26; 245), lorsqu'il se trouve à sa position de point mort bas.

2. Moteur à combustion interne selon la revendication 1, caractérisé en ce que ledit injecteur (61; 264) est relié à des première et deuxième pompes à carburant (64, 65).

3. Moteur à combustion interne selon la revendication 1 ou 2, caractérisé en ce que ledit injecteur (61; 264) est un injecteur électromagnétique.

4. Moteur à combustion interne selon au moins l'une des revendications 1 à 3, caractérisé par un dispositif de commande moteur (73; 257) destiné à commander ledit injecteur (61; 264) sur la base des conditions de fonctionnement détectées du moteur.

5. Moteur à combustion interne selon la revendication 4, caractérisé en ce que lesdites conditions de fonctionnement du moteur sont l'une ou une combinaison parmi l'angle du vilebrequin, la pression interne dans le carter de vilebrequin, la pression interne au cylindre, le cognement du moteur, la température d'air d'admission, l'ouverture d'étranglement, la pression d'admission, une température de cylindre, la pression atmosphérique, la température de l'agent de refroidissement et la vitesse de rotation moteur.

6. Moteur à combustion interne selon au moins l'une des revendications 1 à 5, caractérisé en ce que ledit injecteur (61; 264) comprend un passage d'injection (361a) orienté transversalement par rapport à l'axe du cylindre et menant à au moins un trou d'injection (361d) ayant un angle d'ouverture (µ) d'au moins 45° dans l'axe du cylindre.

7. Moteur à combustion interne selon la revendication 6, caractérisé en ce que l'aire de la section transversale dudit trou d'injection (361d) va en augmentant en partant du côté de la culasse vers le côté du piston.

8. Moteur à combustion interne selon la revendication 6, caractérisé en ce que ledit trou d'injection (361d) a un secteur allongé au niveau du côté de la culasse, évoluant vers un secteur à forme conique du côté du piston.

9. Moteur à combustion interne selon au moins l'une des revendications 1 à 5, caractérisé en ce que ledit injecteur (61; 264) comprend un passage d'injection (361a) orienté transversalement par rapport à l'axe du cylindre et se ramifiant dans au moins deux trous d'injection (361b, 361c), dont le trou supérieur (361b) est dirigé du côté culasse et le trou inférieur (361c) est dirigé du côté piston.

10. Moteur à combustion interne selon la revendication 9, caractérisé en ce que la section transversale du trou d'injection supérieur (361b) est plus petite que la section transversale du trou d'injection inférieur (361c).

11. Moteur à combustion interne selon la revendication 10, caractérisé en ce que le trou d'injection supérieur (361b) a une section transversale allongée dans l'axe du cylindre et le trou d'injection inférieur (361c) a une section transversale circulaire.

12. Moteur à combustion interne selon la revendication 10, caractérisé en ce que le trou d'injection supérieur (361b) a une direction d'injection principale orientée transversalement par rapport à l'axe du cylindre.

13. Moteur à combustion interne selon la revendication 10, caractérisé en ce que le trou d'injection supérieur (361b) a une section transversale circulaire, tandis que le trou d'injection inférieur (361c) a une section transversale allongée dans l'axe du cylindre.

14. Moteur à combustion interne selon la revendication 9, caractérisé par le fait de comporter un deuxième trou d'injection inférieur (361c).

15. Moteur à combustion interne selon la revendication 14, caractérisé par le fait de comporter un deuxième trou d'injection supérieur (361b).

16. Moteur à combustion interne selon la revendication 9, caractérisé en ce que le trou d'injection supérieur (361b) a une section transversale circulaire, tandis que le trou d'injection inférieur (361c) a un angle d'ouverture (µ1) dans l'axe du cylindre par rapport à l'axe dudit passage d'injection (361a) et une section transversale globalement triangulaire avec une partie étroite adjacente audit axe dudit passage d'injection (361a) et une partie plus large du côté piston.

17. Moteur à combustion interne selon l'une des revendications 6 à 16, caractérisé en ce que ledit injecteur (61; 264) comprend une aiguille (362) disposée à l'intérieur d'un carter à aiguille (358), comportant en outre un passage à carburant (362d) formé à l'intérieur de ladite aiguille (362), une pluralité de trous d'alimentation en carburant (362f) ménagés dans la partie pointe de ladite aiguille (362) et une partie buse intégrale (358c) dotée des trous d'injection (361b, 361c) respectifs.

18. Moteur à combustion interne selon la revendication 9, caractérisé en ce que la partie pointe dudit injecteur (61; 264) est placé dans un trou de buse (401) ménagé à travers ladite paroi de cylindre (22a), ledit injecteur (61; 264) ayant un guide d'écoulement d'injection (358g) à forme arquée, réalisé d'une seule pièce, ledit guide d'écoulement d'injection (358g) étant doté de surfaces de guidage (358g1, 358g2) destinées à canaliser l'écoulement d'injection en un écoulement d'injection orienté vers le haut (Y) par rapport à ladite culasse (23; 224) et un écoulement d'injection orienté vers le bas (X), allant vers ledit piston (26; 245), lesdites surfaces de guidage (358g1, 358g2) définissant un angle d'ouverture (µ) dans la direction de l'axe de cylindre, d'au moins 45°.

19. Moteur à combustion interne selon la revendication 18, caractérisé en ce que ledit guide d'écoulement d'injection (358g) est décalé vis-à-vis de l'axe dudit passage d'injection (361a) en direction de la culasse (23; 224) et en plus définit un angle d'expansion (δ) transversal par rapport audit axe de cylindre.

20. Moteur à combustion interne selon l'une des revendications 1 à 19, caractérisé par le fait de comporter un injecteur supplémentaire (61; 264) pour ledit au moins un corps de cylindre (22; 243).

21. Moteur à combustion interne selon l'une des revendications 1 à 20, caractérisé en ce que ledit moteur à combustion interne est un moteur à combustion interne à cycle à quatre temps.

22. Moteur à combustion interne selon l'une des revendications 1 à 20, caractérisé en ce que ledit moteur à combustion interne est un moteur à combustion interne à cycle à deux temps (10; 223), comprenant au moins un orifice d'échappement (44; 254) et au moins un orifice de balayage (41b1) placé à l'opposé l'un de l'autre et en ce qu'une quatrième distance ES mesurée entre ladite extrémité supérieure (22b) dudit corps de cylindre (22; 243) et ledit orifice d'échappement (44; 254) satisfait à l'inéquation ci-après :$\text{0,35 ES < A < 0,65 ES.}$

23. Moteur à combustion interne selon la revendication 22, caractérisé en ce que ledit injecteur ou lesdits injecteurs (61; 264) sont placés à l'opposé dudit orifice d'échappement (44; 254) ou dudit orifice de balayage (41b1).

24. Moteur à combustion interne selon l'une des revendications 3 à 23, caractérisé en ce que ledit injecteur (61; 264) comprend un corps de capuchon (351) monté du côté extérieur d'un carter d'injecteur (350), un noyau (353) doté d'une bobine (352) prévue à l'intérieur dudit carter (350), un carter d'aiguille (358) monté du côté intérieur dudit carter (350) et une buse (361) placée du côté intérieur dudit carter (358) ayant un passage d'injection (361) menant à des trous d'injection (361b, 362c) respectifs.

25. Moteur à combustion interne selon la revendication 24, caractérisé en ce que ledit injecteur (61; 264) est en mesure d'injecter du carburant avec une vitesse d'écoulement de 10 m/s à 30 m/s.
